# EUROPEAN PATENT APPLICATION

(11) **EP 4 478 102 A1**
(43) Date of publication of application: **18.12.2024**
(21) Application number: 24182110.7
(22) Date of filing: 13.06.2024
(51) Int. Cl.: G02B 6/44, H02G 3/08, H02G 15/007, H02G 15/013, H02G 15/04, H02G 15/076

(54) **RIB-BASED FIBER OPTIC SEALING**

(30) Priority: 15.06.2023 US 202363521141 P
(71) Applicant: Corning Research & Development Corporation, Corning, New York 14831 (US)
(72) Inventor: JABLONSKI, Filip Piotr, 91-849 Lodz (PL); RUDA, Michal, 95-060 Brzeziny (PL)
(74) Representative: Reddie & Grose LLP

(57) **Abstract**

An enclosure is provided comprising a base, a cover coupled to the base, a first and second element, and foam member(s). The cover has an open position and a closed position. The first element comprises a first base portion and fingers attached thereto. The second element comprises a second base portion and a ribs attached thereto. The ribs are positioned in rib pairs. Gaps are defined between two ribs of a respective rib pair. The second element defines slots between adjacent rib pairs. The foam member(s) each have a slit defined therein and are configured to receive a cable in the slit. The second element is configured to receive the foam member(s) in slots. Transitioning the cover from the open position to the closed position causes each finger to be received in a respective gap so as to cause compression of the foam member(s) in the slot about the cable.

## Description

### PRIORITY APPLICATION

This application claims the benefit of priority of U.S. Provisional Application No. 63/521,141, filed on June 15, 2023, the content of which is relied upon and incorporated herein by reference in its entirety.

### FIELD

Embodiments relate generally to sealing approaches for cables in enclosures, such as multi-dwelling unit (MDU) terminals.

### BACKGROUND

Many fiber optic enclosures, such as MDU terminals, are designed for both indoor and outdoor applications, which requires providing suitable Ingress Protection (IP) Rating, typically IP55 or even IP65. That means the enclosures need to be both dust and waterproof so that the inner contents of such enclosures are protected. Additionally, enclosures should ensure safety of the cable to protect the cable against forces acting on the cables. One of the main areas of concern during the design of such an enclosure is cable sealing areas located at an entrance of the enclosure.

In many existing enclosures, the sealing provided at the entrance of enclosure is ineffective. Enclosures typically have sets of foam placed in the upper and lower parts of the enclosure with the cable located between them. As such, closing a cover of the enclosure squeezes both upper and lower parts together to create some sealing around the cable. In this approach, sealing at an enclosure is accomplished by taking a force generated when a cover is closed and transferring that force to cause foam to be compressed, with the direction of the force acting on the foam being parallel to the direction of the closing force acting on the cover. Where these approaches are used, the compression forces acting on sealing components are often uneven, causing the seal to be less effective. Further, such configurations can be prone to wear and seepage of dust and/or water from the external environment.

Improvements in the foregoing are desired.

### BRIEF SUMMARY

In various embodiments contemplated herein, the direction of the force acting on the foam is predominantly in a direction that is perpendicular to the force generated when a cover is closed. The force generated when a cover is closed is used to urge fingers of the foam into respective gaps formed between ribs. Movement of the fingers into the gaps causes ribs to shift in a direction that is generally perpendicular to the direction of movement for the fingers. The movement of the ribs causes compression of foam members positioned adjacent to the ribs, with the foam members being compressed around the cables. These provide novel approaches for cable sealing areas in fiber optics. The sealing approaches contemplated herein provide more uniform sealing by applying relatively uniform compression forces on a foam member. Further, contemplated sealing assemblies herein only include foam on one side, e.g., the base or the cover, providing for increased protection of the foam and cable and avoiding increased exposure of the foam surface that receives the cable. Sealing approaches contemplated herein also enable enclosures, such as MDU terminals, to receive a high amount of cables therein so that the enclosure has a high cable density.

Embodiments discussed herein may be useful for enclosures and the cable entry regions of these enclosures, but the embodiments may be utilized in other ways. The sealing approaches discussed herein may ensure full protection of the inner contents of an enclosure with regards to water and dust penetration.

In an example embodiment, an enclosure is provided comprising a base, a cover coupled to the base, a first element, a second element, and at least one foam member. The cover has an open position and a closed position. The first element comprises a first base portion and a plurality of fingers, and a first end of each of the plurality of fingers is attached to the first base portion. The second element comprises a second base portion and a plurality of ribs. A first end of each rib of the plurality of ribs is attached to the second base portion, and the plurality of ribs are positioned in rib pairs. A plurality of gaps are defined in the second element with each gap of the plurality of gaps being defined between two ribs of a respective rib pair. The second element defines a plurality of slots with at least one slot of the plurality of slots being formed between adjacent rib pairs. The at least one foam member has a slit defined therein, and the at least one foam member is configured to receive a cable in the slit. The second element is configured to receive the at least one foam member in a slot of the plurality of slots. One of the first element or the second element are attached to the base, and the other of the first element and the second element are attached to the cover. Transitioning the cover from the open position to the closed position causes each finger of the plurality of fingers in the first element to be received in a respective gap of the plurality of gaps so as to cause compression of the at least one foam member in the slot about the cable in the slit.

In some embodiments, receipt of the plurality of fingers in the plurality of gaps may cause the plurality of ribs to move to allow the plurality of gaps to be expanded. The plurality of ribs may move towards the plurality of slots to reduce the size of the plurality of slots, and movement of the plurality of ribs towards the plurality of slots may cause compression of the at least one foam member.

In some embodiments, the plurality of ribs may each define a first surface. The first surface of each rib of the plurality of ribs may face a respective slot of the plurality of slots. The second base portion may define a second surface, and the first surface may define an obtuse angle relative to the second surface. In some embodiments, the at least one foam member may be configured to receive a plurality of cables in the slit. Additionally, in some embodiments, the at least one foam member may be configured to receive at least four cables in the slit.

In some embodiments, the at least one foam member may define at least one hole, and the at least one hole may be positioned along the slit. In some embodiments, the at least one foam member may be configured to deform elastically. In some embodiments, the cover may comprise a mounting feature configured to facilitate mounting of the enclosure to a surface in an outside environment.

In some embodiments, the at least one foam member has a rectangular prism shape. Furthermore, in some embodiments, the slit is positioned along a centerline of the at least one foam member. In some embodiments, the enclosure may further comprise at least one strain relief feature that is configured to provide strain relief to the cable. Additionally, in some embodiments, the strain relief feature may be positioned proximate to the first element and the second element.

In another example embodiment, a method for sealing one or more cables using a sealing assembly is provided. The method comprises providing a first element comprising a first base portion and a plurality of fingers. The plurality of fingers are each attached to the first base portion at a first end of the plurality of fingers. The method also comprises providing a second element comprising a second base portion and a plurality of ribs. A first end of each rib of the plurality of ribs is attached to the second base portion. The plurality of ribs are positioned in rib pairs, and a plurality of gaps are defined in the second element with each gap of the plurality of gaps being defined between two ribs of a respective rib pair. The second element defines a plurality of slots with each slot of the plurality of slots being formed between adjacent rib pairs. The method also comprises providing at least one foam member defining a slit therein, providing a cable, positioning the cable in the slit of the at least one foam member, and positioning the at least one foam member in a slot of the plurality of slots. The method also comprises moving the first element relative to the second element so that each finger of the plurality of fingers in the first element is received in a respective gap of the plurality of gaps defined in the rib pairs of the second element so as to cause compression of the at least one foam member in the slot to seal the cable with the at least one foam member.

In some embodiments, the method may also comprise providing a base and a cover, with the cover having an open position and a closed position. Additionally, the method may comprise installing one of the first element or the second element in the base, installing the other of the first element and the second element in the cover, and transitioning the cover from the open position to the closed position to cause the first element to move relative to the second element.

In another example embodiment, a method for manufacturing a sealing assembly is provided. The method comprises providing a first element comprising a first base portion and a plurality of fingers. The plurality of fingers are each attached to the first base portion at a first end of the plurality of fingers. The method also comprises providing a second element comprising a second base portion and a plurality of ribs, and a first end of each rib of the plurality of ribs is attached to the second base portion. The plurality of ribs are positioned in rib pairs, and a plurality of gaps are defined in the second element with each gap of the plurality of gaps being defined between two ribs of a respective rib pair. The second element defines a plurality of slots with at least one slot of the plurality of slots being formed between adjacent rib pairs. The method also comprises providing at least one foam member defining a slit therein, with the at least one foam member being configured to receive a cable in the slit. The method also comprises positioning the at least one foam member in a slot of the plurality of slots and assembling the first element and the second element. The first element and the second element are assembled such that the first element is configured to move relative to the second element so that each finger of the plurality of fingers in the first element is received in a respective gap of the plurality of gaps defined in the rib pairs of the second element so as to cause compression of the at least one foam member in the slot.

In another example embodiment, a sealing assembly for sealing one or more cables is provided. The sealing assembly comprises a first element, a second element, and at least one foam member. The first element comprises a first base portion and a plurality of fingers, and the plurality of fingers are each attached to the first base portion at a first end of the plurality of fingers. The second element comprises a second base portion and a plurality of ribs, and a first end of each rib of the plurality of ribs is attached to the second base portion. The plurality of ribs are positioned in rib pairs, and a plurality of gaps are defined in the second element with each gap of the plurality of gaps being defined between two ribs of a respective rib pair. The second element defines a plurality of slots with at least one slot of the plurality of slots being formed between adjacent rib pairs. The at least one foam member defines a slit therein, and the at least one foam member is configured to receive a cable in the slit. The second element is configured to receive the at least one foam member in a slot of the plurality of slots, and the plurality of gaps defined in the rib pairs of the second element are each configured to receive a respective finger of the plurality of fingers so as to cause compression of the at least one foam member in the slot.

In some embodiments, receipt of the plurality of fingers in the plurality of gaps may cause the plurality of ribs to move to allow the plurality of gaps to be expanded. The plurality of ribs may move towards the plurality of slots to reduce the size of the plurality of slots, and movement of the plurality of ribs towards the plurality of slots may cause compression of the at least one foam member. Additionally, in some embodiments, the plurality of ribs may each define a first surface, and the first surface of each rib of the plurality of ribs may face a respective slot of the plurality of slots. The second base portion may define a second surface, and the first surface may define an obtuse angle relative to the second surface. In some embodiments, the at least one foam member may be configured to receive a plurality of cables in the slit. Furthermore, in some embodiments, the at least one foam member may be configured to receive at least four cables in the slit. In some embodiments, the at least one foam member may define at least one hole, and the at least one hole may be positioned along the slit. Also, in some embodiments, the at least one foam member may be configured to deform elastically. In some embodiments, the at least one foam member may have a rectangular prism shape. Additionally, in some embodiments, the slit may be positioned along a centerline of the at least one foam member. In some embodiments, the sealing assembly may further comprise at least one strain relief feature that is configured to provide strain relief to the one or more cables.

### BRIEF DESCRIPTION OF THE DRAWINGS

Reference will now be made to the accompanying drawings, which are not necessarily drawn to scale, and wherein:
FIG. 1A is a perspective view illustrating an example enclosure for sealing one or more cables, in accordance with some embodiments discussed herein;
FIG. 1B is a front view illustrating the enclosure of FIG. 1A, in accordance with some embodiments discussed herein;
FIG. 1C is a perspective view illustrating a plurality of cables entering and exiting the enclosure of FIG. 1A with effective sealing provided around the cables, in accordance with some embodiments discussed herein;
FIG. 1D is a bottom view illustrating a plurality of cables entering and exiting the enclosure of FIG. 1A with effective sealing provided around the cables, in accordance with some embodiments discussed herein;
FIG. 2 is a perspective view illustrating an example first element having a plurality of fingers extending from a base portion and an example second element have a plurality of ribs, in accordance with some embodiments discussed herein;
FIG. 3A is an enhanced, bottom view of the second element of FIG. 2 where ribs of the second element are shown in greater detail, in accordance with some embodiments discussed herein;
FIG. 3B is an enhanced, perspective view of a portion of the second element of FIG. 2, in accordance with some embodiments discussed herein;
FIG. 4A is a bottom view illustrating an example foam member having a slit defined therein where cables may be received, in accordance with some embodiments discussed herein;
FIG. 4B is a perspective view illustrating the foam member of FIG. 4A, in accordance with some embodiments discussed herein;
FIG. 5A is a bottom view illustrating another example foam member having a slit defined therein where cables may be received, where the slit has four holes to assist in positioning cables, in accordance with some embodiments discussed herein;
FIG. 5B is a perspective view illustrating the foam member of FIG. 5A, in accordance with some embodiments discussed herein;
FIG. 6A is a bottom view illustrating another example foam member having a slit defined therein where a cable may be received, where the slit has one hole to assist in positioning a cable, in accordance with some embodiments discussed herein;
FIG. 6B is a perspective view illustrating the foam member of FIG. 6A, in accordance with some embodiments discussed herein;
FIG. 7A is a bottom view illustrating an example sealing assembly having a first element, a second element, and foam members and with the first element engaged with the second element so that an effective seal is formed around cables received within the foam members, in accordance with some embodiments discussed herein;
FIG. 7B is an enhanced, bottom view illustrating an example portion of a sealing assembly, in accordance with some embodiments discussed herein;
FIG. 7C is an enhanced, bottom view illustrating example foam members received in slots defined between rib pairs of a second element, in accordance with some embodiments discussed herein;
FIG. 7D is an enhanced, bottom view illustrating the first element, the second element, and the foam members of FIG. 7A after fingers of the first element have been inserted into gaps formed by ribs in each rib pair, in accordance with some embodiments discussed herein;
FIG. 8A is a perspective view illustrating a plurality of strain relief features that are each configured to provide strain relief for a cable, in accordance with some embodiments discussed herein;
FIG. 8B is a perspective view illustrating the strain relief features of FIG. 8A with a cable received in each of the strain relief features, in accordance with some embodiments discussed herein;
FIG. 8C is an enhanced, perspective view illustrating one of the strain relief features of FIG. 8A, in accordance with some embodiments discussed herein;
FIG. 8D is an enhanced, perspective view illustrating the strain relief feature of FIG. 8B with a cable received in the strain relief feature, in accordance with some embodiments discussed herein;
FIG. 8E is an enhanced, bottom view illustrating one of the strain relief features of FIG. 8A, in accordance with some embodiments discussed herein;
FIG. 8F is an enhanced, bottom view illustrating the strain relief feature of FIG. 8C with a cable received in the strain relief feature, in accordance with some embodiments discussed herein;
FIG. 9 is a flow chart illustrating an example method for sealing one or more cables using a sealing assembly, in accordance with some embodiments discussed herein; and
FIG. 10 is a flow chart illustrating an example method of manufacturing a sealing assembly, in accordance with some embodiments discussed herein.

### DETAILED DESCRIPTION

Example embodiments now will be described more fully hereinafter with reference to the accompanying drawings, in which some, but not all embodiments are shown. Like reference numerals generally refer to like elements throughout. For example, reference numbers 210 and 710 both refer to a first element. Additionally, any connections or attachments may be direct or indirect connections or attachments unless specifically noted otherwise. As used herein, the terms "primary" and "secondary" are merely used to provide distinct names for different components, and these terms are not intended to indicate that one component is of a greater or lesser value, importance, size, weight, etc. than another component. In general, the present disclosure relates to enclosures, methods, and sealing assemblies that may be used to form a seal. A sealing assembly is contemplated that may be utilized within an enclosure. The enclosure may include a cover, and the sealing assembly may include a foam where cables may be received. Moving the cover of the enclosure to a closed position may cause foam to be compressed in a direction different from the direction that force is applied when a cover is closed.

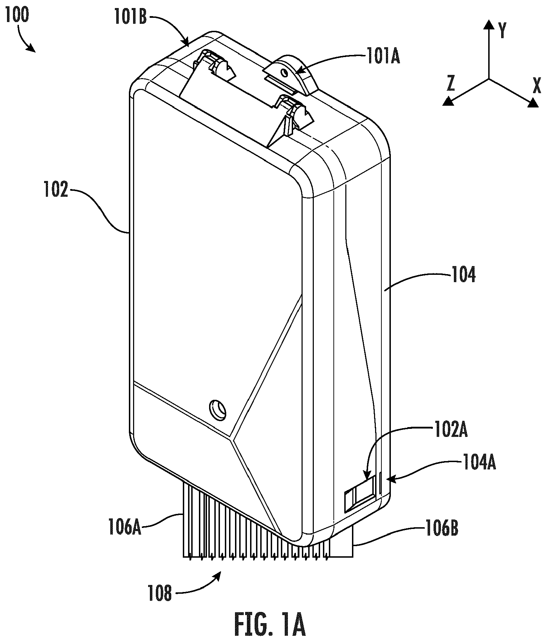

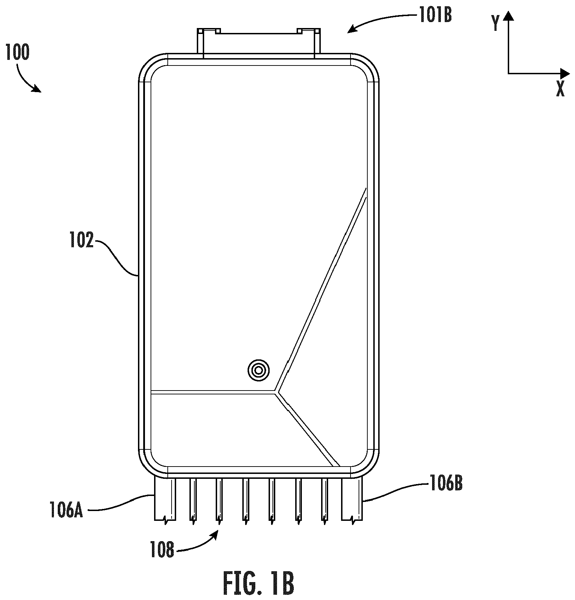

Referring first to FIGS. 1A and 1B, an example enclosure 100 for sealing one or more cables is illustrated. The enclosure 100 includes a cover 102 and a base 104. The cover 102 and the base 104 are rotatably coupled together at the hinge 101B. Additionally, a fastener 102A and a latch 104A are provided to retain the cover 102 in a closed position. The fastener 102A is attached to the cover 102, and the latch 104A is attached to the base 104. Once the cover 102 has been moved to a closed position, the fastener 102A may engage the latch 104A to prevent the cover 102 from opening. However, the fastener 102A and the latch 104A may be disengaged in order to move the cover 102 back to an open position if a user needs to access the inner contents of the enclosure 100.

The enclosure 100 may include one or more mounting features to facilitate attachment of the enclosure 100 to another object such as a wooden post, a wall, etc. For example, the enclosure 100 includes a mounting feature in the form of a hole 101A on the base 104. The hole 101 may receive a fastener therein to facilitate the connection of the enclosure 100 to another object, such as a wall, pole, or other inside or outside surface. The hole 101 may be a threaded hole in some embodiments. However, other mounting features may be utilized including but not limited to fasteners.

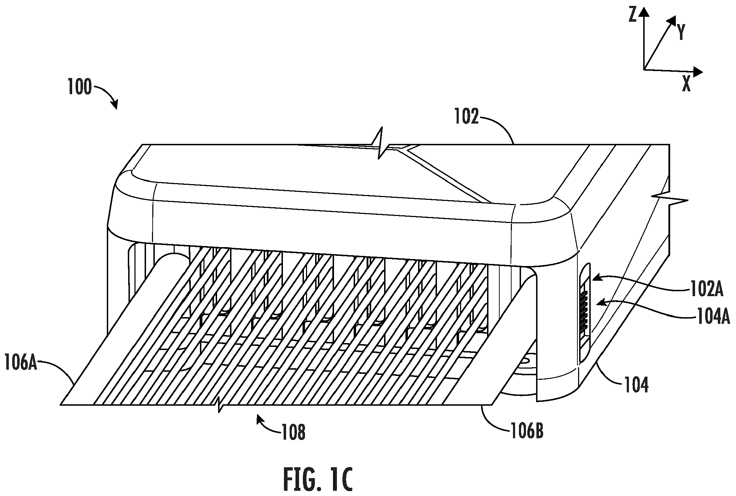

As can be seen in FIGS. 1B and 1C, various cables may extend into and out of the enclosure 100. For example, a main input cable 106A, a main output cable 106B, and secondary output cables 108 are illustrated in FIG. 1B. The secondary output cables 108 and other secondary output cables discussed herein may be provided in the form of drop cables. The main input cable 106A and the main output cable 106B possess the same cross-sectional size, with this cross-sectional size being greater than the cross-sectional size of each of the secondary output cables 108. However, these cables 106A, 106B, 108 may possess different sizes in other embodiments.

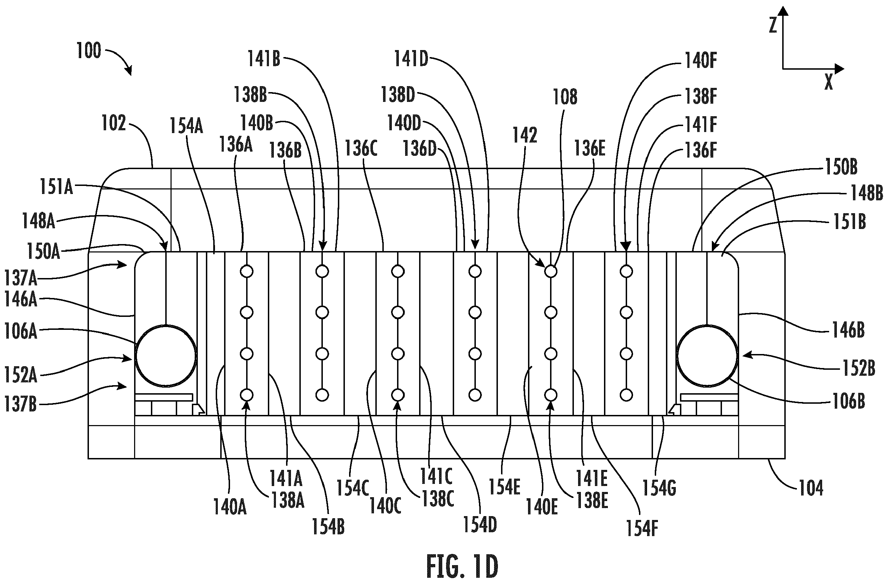

Turning now to FIG. 1D, various cable sealing features of the enclosure 100 of FIG. 1A are illustrated in greater detail. In FIG. 1D, a first foam member 136A, a second foam member 136B, a third foam member 136C, a fourth foam member 136D, a fifth foam member 136E, and a sixth foam member 136F are illustrated. These foam members 136A-136F each comprise a first portion and a second portion with a slit defined between the first portion and the second portion. The first foam member 136A comprises a first portion 140A and a second portion 141A with a first slit 138A defined between the first portion 140A and the second portion 141A. The second foam member 136B comprises a first portion 140B and a second portion 141B with a second slit 138B defined between the first portion 140B and the second portion 141B. The third foam member 136C comprises a first portion 140C and a second portion 141C with a third slit 138C defined between the first portion 140C and the second portion 141C. The fourth foam member 136D comprises a first portion 140D and a second portion 141D with a fourth slit 138D defined between the first portion 140D and the second portion 141D. The fifth foam member 136E comprises a first portion 140E and a second portion 141E with a fifth slit 138E defined between the first portion 140E and the second portion 141E. The sixth foam member 136F comprises a first portion 140F and a second portion 141F with a sixth slit 138F defined between the first portion 140F and the second portion 141F.

Each of the foam members 136A-136F define four holes 142, with the holes 142 being positioned along the slits 138A-138F. The holes 142 assist with positioning secondary output cables 108 at different positions along the slits 138A-138F so that the spacing between cables along the Z-axis may be maintained. For example, a secondary output cable 108 is positioned in each of the holes 142 so that four secondary output cables 108 are positioned in each of the slits 138A-138F and so that twenty-four total secondary output cables 108 extend into and out of the enclosure 100. While four holes 142 are defined in each of the foam members 136A-136F, a different number of holes 142 may be defined in the foam members 136A-136F in other embodiments. Additionally, in some embodiments, the holes 142 possess a circular shape. However, in some embodiments, the holes 142 possess other shapes.

Additionally, a main input cable foam members 146A is provided to aid in sealing the main input cable 106A, while a main output cable foam member 146B is provided to aid in sealing the main output cable 106B. The main input cable foam member 146A comprises a first portion 150A and a second portion 151A with a first slit 148A defined between the first portion 150A and the second portion 151A. The main output cable foam member 146B comprises a first portion 150B and a second portion 151B with a second slit 148B defined between the first portion 150B and the second portion 151B. The main input cable foam member 146A defines a first hole 152A, with the first hole 152A being positioned within the first slit 148A. The first hole 152A assists with positioning the main input cable 106A within the first slit 148A at the desired position along the Z-axis. The main output cable foam member 146B defines a second hole 152B, with the second hole 152B being positioned within the second slit 148B. The second hole 152B assists with positioning the main output cable 106B within the second slit 148B at the desired position along the Z-axis. While only one hole is defined in each of the main input cable foam member 146A and the main output cable foam member 146B, a different number of holes may be defined in other embodiments. Additionally, the holes 152A, 152B generally possess a circular shape, but the holes 152A, 152B may possess other shapes as well.

Each of the foam members 136A-136F, 146A-146B extend between a first end and a second end of the foam member, such as illustrated by a first end 137A and a second end 137B of the main input cable foam member 146A, and the illustrated two portions of each of the foam members 136A-136F are attached together at each of the second ends, such as below a respective slit.

Walls may be positioned between adjacent foam members, and the walls may assist in forming an effective seal of the inner contents of the enclosure 100. A first wall 154A is positioned between the main input cable foam member 146A and the first foam member 136A. The second wall 154B is positioned between the first foam member 136A and the second foam member 136B. The third wall 154C is positioned between the second foam member 136B and the third foam member 136C. The fourth wall 154D is positioned between the third foam member 136C and the fourth foam member 136D. The fifth wall 154E is positioned between the fourth foam member 136D and the fifth foam member 136E. The sixth wall 154F is positioned between the fifth foam member 136E and the sixth foam member 136F. The seventh wall 154G is positioned between the sixth foam member 136F and the main output cable foam member 146B.

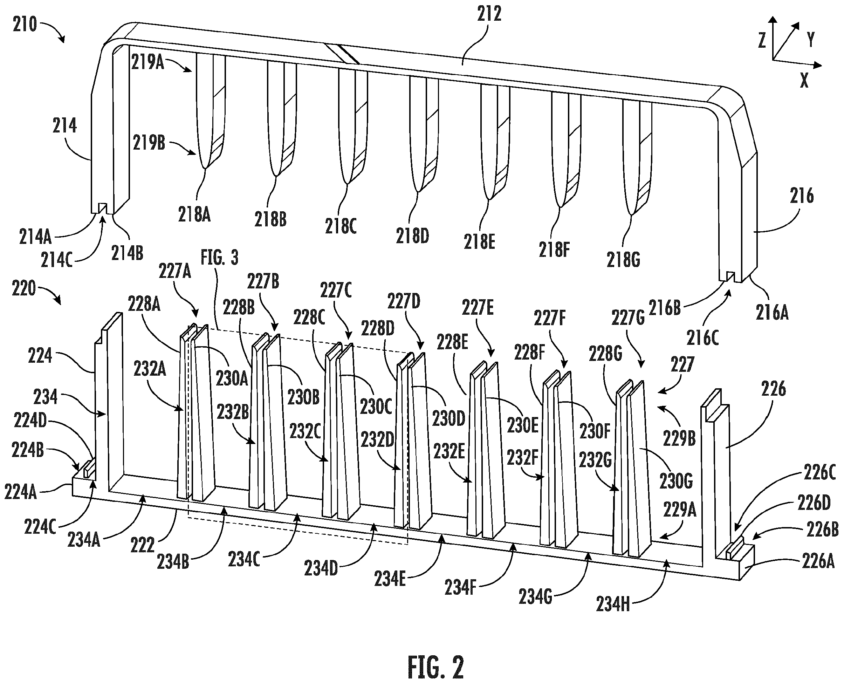

In various embodiments discussed herein, sealing assemblies are provided in the enclosures with a first element and a second element that work together to form an effective seal for one or more cables. FIG. 2 illustrates an example of a first element 210 of a sealing assembly. The first element 210 defines a base portion 212, and base portion 212 extends in a direction that is parallel to the X-axis in the figure. The first element 210 also defines a plurality of fingers. In the first element 210, a first finger 218A, a second finger 218B, a third finger 218C, a fourth finger 218D, a fifth finger 218E, a sixth finger 218F, and a seventh finger 218G are included. However, a different number of fingers may be included in the first element 210 in other embodiments. Each of the fingers 218A-218G extend between a first end 219A and a second end 219B. At the first end 219A, each of the fingers 218A-218G are attached to the base portion 212. The second end 219B of each of the fingers 218A-218G are free ends.

Additionally, the first element 210 comprises a first arm 214. The first arm 214 is attached to the base portion 212 and extends in a direction that is parallel to the Z-axis. At the free end of the first arm 214, a first protrusion 214A and a second protrusion 214B extend past other portions of the first arm 214 in a direction that is parallel to the Z-axis, and a recess 214C is formed between the two protrusions 214A, 214B. The recess 214C may receive a protrusion 224D of a second element 220 so that the first element 210 and the second element 220 may be positioned appropriately relative to each other.

The first element 210 also comprises a second arm 216. The second arm 216 is attached to the base portion 212 and extends in a direction that is parallel to the Z-axis. At the free end of the second arm 216, a first protrusion 216A and a second protrusion 216B extend past other portions of the second arm 216 in a direction that is parallel to the Z-axis, and a recess 216C is formed between the two protrusions 216A, 216B. The recess 216C may receive a protrusion 226D of the second element 220 so that the first element 210 and the second element 220 may be positioned appropriately relative to each other.

For the purposes of the present disclosure, the first element 210 is positioned in cover 102, and the second element 220 is positioned on base 104. However, is within the scope of the present disclosure that the first element 210 may be positioned at one of the base 104 (*see* FIG. 1A) or the cover 102 (*see* FIG. 1A) in some embodiments, and the second element 220 may be positioned at the other of the base 104 or the cover 102. In some embodiments, the first element 210 may be integrally connected to the base 104 or the cover 102, but the first element 210 may be removably attachable to the base 104 or the cover 102 in some embodiments. Similarly, the second element 220 may be integrally connected to the base 104 or the cover 102 in some embodiments, but the second element 220 may be removably attachable to the base 104 or the cover 102 in some embodiments. Transitioning the cover 102 from the open position to the closed position may be configured to cause each finger of the plurality of fingers 218A-218G in the first element 210 to be received in a respective gap of the plurality of gaps 232A-232G defined in the second element 220, as will be described in greater detail herein. Accordingly, the first element 210 may work in conjunction with the second element 220 to form a sealing assembly that may be used in an enclosure.

The second element 220 defines a base portion 222. The second element 220 also defines a plurality of ribs 227. In some embodiments, ribs 227 are positioned in rib pairs. For example, the second element 220 comprises a first rib pair 227A, a second rib pair 227B, a third rib pair 227C, a fourth rib pair 227D, a fifth rib pair 227E, a sixth rib pair 227F, and seventh rib pair 227G. The first rib pair 227A includes a first primary rib 228A and a first secondary rib 230A. The second rib pair 227B includes a second primary rib 228B and a second secondary rib 230B. The third rib pair 227C includes a third primary rib 228C and a third secondary rib 230C. The fourth rib pair 227D includes a fourth primary rib 228D and a fourth secondary rib 230D. The fifth rib pair 227E includes a fifth primary rib 228E and a fifth secondary rib 230E. The sixth rib pair 227F includes a sixth primary rib 228F and a sixth secondary rib 230F. The seventh rib pair 227G includes a seventh primary rib 228G and a seventh secondary rib 230G.

Each of the ribs 227 of the rib pairs 227A-227G extend between a first end 229A and a second end 229B. The first end 229A of each of the ribs 227 of the rib pairs 227A-227G is attached to the base portion 222, and the second end 229B of each of the ribs 227 of the rib pairs 227A-227G are free ends.

Gaps are defined in the second element 220 where fingers 218A-218G of the first element 210 may be received, and each gap is defined between two ribs 227 of a respective rib pair. A first gap 232A is defined between the first primary rib 228A and the first secondary rib 230A of the first rib pair 227A. A second gap 232B is defined between the second primary rib 228B and the second secondary rib 230B of the second rib pair 227B. A third gap 232C is defined between the third primary rib 228C and the third secondary rib 230C of the third rib pair 227C. A fourth gap 232D is defined between the fourth primary rib 228D and the fourth secondary rib 230D of the fourth rib pair 227D. A fifth gap 232E is defined between the fifth primary rib 228E and the fifth secondary rib 230E of the fifth rib pair 227E. A sixth gap 232F is defined between the sixth primary rib 228F and the sixth secondary rib 230F of the sixth rib pair 227F. A seventh gap 232G is defined between the seventh primary rib 228G and the seventh secondary rib 230G of the seventh rib pair 227G.

Additionally, the second element 220 comprises a first arm 224. The first arm 224 is attached to the base portion 222 at one end and extends in a direction that is parallel to the Z-axis. A first extension 224A extends off the side of the first arm 224 so that the first extension 224A extends farther in a direction parallel to the X-axis relative to other portions of the first arm 224. A protrusion 224D protrudes from a surface of the first extension 224A in a direction that is parallel to the Z-axis past other portions of the first extension 224A, and a first recess 224B and a second recess 224C are positioned on each side of the protrusion 224D.

The protrusion 224D and the recesses 224B, 224C may be used to position the second element 220 relative to the first element 210. The first protrusion 214A on the first arm 214 of the first element 210 may be received in the first recess 224B defined in the second element 220, the second protrusion 214B on the first arm 214 of the first element 210 may be received in the second recess 224C defined in the second element 220, and the protrusion 224D of the second element 220 may be received in the recess 214C defined in the first arm 214 of the first element 210.

The second element 220 also comprises a second arm 226. The second arm 226 is attached to the base portion 222 at one end and extends in a direction that is parallel to the Z-axis. A second extension 226A extends off the side of the second arm 226 so that the second extension 226A extends farther in a direction parallel to the X-axis relative to other portions of the second arm 226. A protrusion 226D protrudes from a surface of the second extension 226A in a direction that is parallel to the Z-axis past other portions of the second extension 226A, and a first recess 226B and a second recess 226C are positioned on each side of the protrusion 226D.

The protrusion 226D and the recesses 226B, 226C may be used to position the second element 220 relative to the first element 210. The first protrusion 216A on the second arm 216 of the first element 210 may be received in the first recess 226B defined in the second element 220, the second protrusion 216B on the second arm 216 of the first element 210 may be received in the second recess 226C defined in the second element 220, and the protrusion 226D of the second element 220 may be received in the recess 216C defined in the second arm 216 of the first element 210.

The second element 220 also defines a plurality of slots 234 where foam members may be received. Many of the slots 234 are formed between adjacent rib pairs. However, one slot 234A is formed between a rib pair and the first arm 224, and another slot 234H is formed between a rib pair and the second arm 226. As mentioned previously, a first slot 234A is formed between the first arm 224 and the first rib pair 227A. A second slot 234B is formed between the first rib pair 227A and the second rib pair 227B. A third slot 234C is formed between the second rib pair 227B and the third rib pair 227C. A fourth slot 234D is formed between the third rib pair 227C and the fourth rib pair 227D. A fifth slot 234E is formed between the fourth rib pair 227D and the fifth rib pair 227E. A sixth slot 234F is formed between the fifth rib pair 227E and the sixth rib pair 227F. A seventh slot 234G is formed between is formed between the sixth rib pair 227F and the seventh rib pair 227G. An eighth slot 234H is formed between the seventh rib pair 227G and the second arm 226.

As mentioned previously, the first element 210 may be positioned at one of the base 104 (*see* FIG. 1A) or the cover 102 (*see* FIG. 1A) in some embodiments, and the second element 220 may be positioned at the other of the base 104 or the cover 102. Where this is the case, transitioning the cover 102 from the open position to the closed position may be configured to cause each finger of the plurality of fingers 218A-218G in the first element 210 to be received in a respective gap of the plurality of gaps 232A-232G defined in the second element 220. The second element 220 is also configured to receive the foam members in the plurality of slots 234, and receipt of the fingers 218A-218G in the gaps 232A-232G causes compression of the foam members in the slots 234.

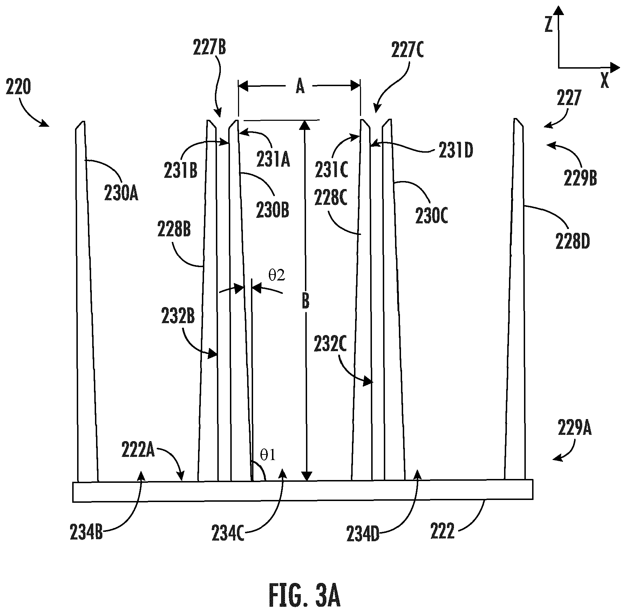

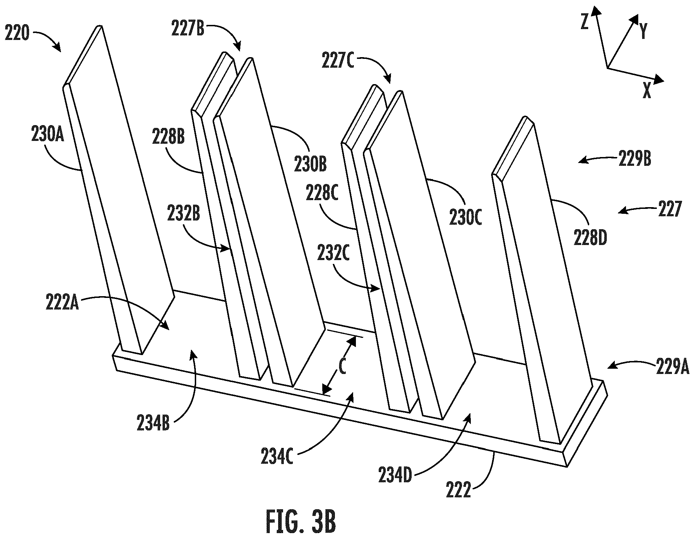

FIGS. 3A and 3B, as expanded from the box labeled "FIG. 3" in FIG. 2, illustrate close-up views of some of the ribs 227 of the second element 220 in greater detail. Each of the ribs 227 of the rib pairs 227A-227G extend between a first end 229A and a second end 229B. The first end 229A of each of the ribs 227 of the rib pairs 227A-227G is attached to the base portion 222. The base portion 222 defines a surface 222A where the ribs 227 of the rib pairs 227A-227G are attached. The second end 229B of each of the ribs 227 of the rib pairs 227A-227G are free ends. Each of the ribs 227 define a first surface, with the first surface facing an adjacent slot. Each of the ribs 227 also defines a second surface, with the second surface facing an adjacent gap. For example, the second secondary rib 230B defines a first surface 231A that faces the adjacent third slot 234C, and the second secondary rib 230B defines a second surface 231B that faces the adjacent second gap 232B. As another example, the third primary rib 228C defines a first surface 231C that faces the adjacent third slot 234C, and the third primary rib 228C defines a second surface 231D that faces the adjacent third gap 232C. The first surface of each of the ribs 227 of the rib pairs 227A-227G defines an obtuse angle relative to the surface 222A of the base portion 222. For example, the first surface 231A of the second secondary rib 230B extends at an obtuse angle θ1 relative to the surface 222A of the base portion 222. The obtuse angle θ1 may be an angle that is greater than 90 degrees but less than 95 degrees in some embodiments, but the obtuse angle θ1 may possess other values in other embodiments to tailor the design as needed. In FIG. 3A, this obtuse angle θ1 is about 91.64 degrees (a portion of the obtuse angle past 90 degrees is illustrated as angle θ2 for clarity of illustration). Similar angles may be used for surfaces of other ribs 227 that face the slots 234. The second surface 231B of the second secondary rib 230B extends at an angle of 90 degrees relative to the surface 222A of the base portion 222 and a 90 degree angle may also be used for surfaces of other ribs 227 that face the gaps. Additionally, the second surface of each of the ribs 227 of the rib pairs 227A-227G defines a right angle relative to the surface 222A of the base portion 222. In the illustrated embodiment, the thickness of the second secondary rib 230B proximate to the base portion 222 is greater than the thickness of the second secondary rib 230B at locations away from the base portion 222. This increased thickness of the second secondary rib 230B at locations proximate to the base portion 222 may ensure proper stiffness of ribs 227 and increased reliability for the design. Because of the obtuse angle θ1 and similar angles on other ribs 227, the ribs 227 may form slots 234B, 234C, 234D having a V-shape.

Slots 234 may be positioned between a primary rib and a secondary rib. For example, the third slot 234C, as shown in FIG. 3A, is between the second secondary rib 230B and the third primary rib 228C. The slots 234 each have an increased size at the second end 229B of the ribs 227 of the rib pairs 227A-227G, and the slots 234 decrease in size towards the first end 229A of the ribs 227 of the rib pairs 227A-227G due to the increased size of the ribs 227 of the rib pairs 227A-227G at the first end 229A. The slots 234 define a width A along the X-axis at the second end 229B of the ribs 227 of the rib pairs 227A-227G. This width A may be adjusted in various embodiments to enable foam members of different sizes to be effectively received in the slots 234 and so that an effective seal may be formed. In some embodiments, the width A may possess a value between about 10 millimeters and about 30 millimeters, between about 12.5 millimeters and about 27.5 millimeters, or between about 15 millimeters and about 25 millimeters. In FIG. 3A, the width A is equal to about 20 millimeters.

The ribs 227 of the rib pairs 227A-227G each extend a distance B in a direction that is parallel to the Z-axis, with the distance B being measured from the surface 222A of the base portion 222 to the farthest point on the second end 229B of the ribs 227 of the rib pairs 227A-227G. The distance B may be adjusted in various embodiments to enable foam members of different sizes to be effectively received in the slots 234 and so that an effective seal may be formed. The distance B may be dependent upon a variety of factors such as the number of secondary output cables 108 (*see* FIGS. 1A-1D), the size of the enclosure 100 (*see* FIGS. 1A-1D), the size of various components within the enclosure 100, and other factors. In some embodiments, the distance B may be between about 20 millimeters and about 100 millimeters, between about 40 millimeters and about 80 millimeters, between about 50 millimeters and about 70 millimeters, between about 55 millimeters and about 65 millimeters, or about 60 millimeters.

As illustrated in FIG. 3B, each of the ribs 227 of the rib pairs 227A-227G extend a distance C in a direction that is parallel to the Y-axis. The distance C may be adjusted in various embodiments to enable foam members of different sizes to be effectively received in the slots 234 and so that an effective seal may be formed. The distance C may be between about 5 millimeters and about 20 millimeters, between about 7 millimeters and about 18 millimeters, between about 9 millimeters and about 16 millimeters, or between about 10 millimeters and about 14 millimeters. In FIG. 3B, the distance C is equal to about 12 millimeters.

Various foam members may be used in sealing assemblies described herein, and these foam members may receive cables in slits formed within the foam members. Ribs within the sealing assemblies may be urged against the foam members to compress the foam members around the cables so that effective seals are formed.

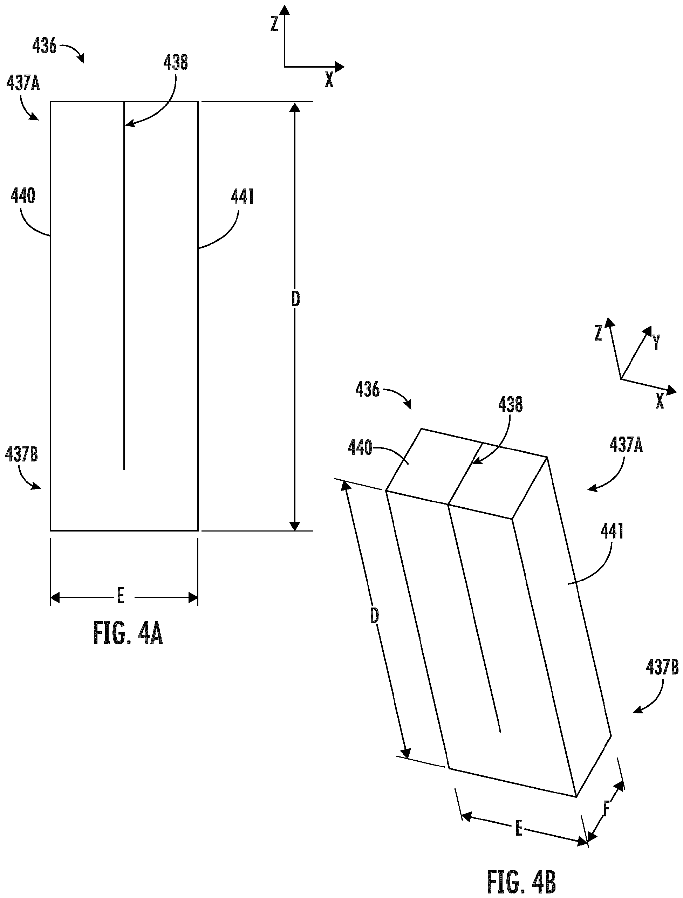

Looking first at FIGS. 4A and 4B, a first example foam member 436 is illustrated. The foam member 436 and other foam members contemplated herein may comprise cell foam material, but foam members may additionally or alternatively include other materials. The cell foam material may also be susceptible to compression or squeezing. The foam member 436 defines a first end 437A and a second end 437B. Additionally, the foam member 436 defines a first portion 440 and a second portion 441, and a slit 438 is defined between the first portion 440 and the second portion 441. The first portion 440 and the second portion 441 are attached together at the second end 437B, and the first portion 440 and the second portion 441 are separated by the slit 438 at the first end 437A. The slit 438 extends partially into the foam member 436 from the first end 437A to the location proximate to the second end 437B where the two portions 440, 441 are attached together.

The foam member 436 is configured to deform elastically. The slit 438 is positioned along a centerline of the foam member 436, but the slit 438 may be provided in different positions in other embodiments. The slit 438 extends along a straight line, but the slit 438 may possess other shapes in other embodiments. The foam member 436 is configured to receive one or more cables in the slit 438. For example, in some embodiments, the foam member 436 may be configured to receive four or more cables in the slit 438. While only one slit 438 is illustrated in the foam member 436, additional slits may be included in other embodiments.

The foam member 436 comprises a rectangular prism shape when it is not in use, however, the foam member 436 may be compressed into different shapes when positioned in a sealing assembly. The foam member 436 extends a distance D along a direction that is parallel to the Z-axis from the farthest point on the first end 437A to the farthest point on the second end 437B. The distance D may match the distance B (*see* FIG. 3A) of the ribs 227 (*see* FIG. 2) on the second element 220 (*see* FIG. 2) so that the foam member 436 is similar in size to the ribs 227 of the second element 220 in a direction that is parallel to the Z-axis. The foam member 436 extends a distance E along a direction that is parallel to the X-axis. The distance E may match the distance A (*see* FIG. 3A) so that the foam member 436 has a similar size in a direction that is parallel to the X-axis relative to the slots 234B-234G of the second element 220 (*see* FIG. 3A). Additionally, as illustrated in FIG. 4B, the foam member 436 extends a distance F along a direction that is parallel to the Y-axis. The distance F may match the distance C (*see* FIG. 3B) so that the foam member 436 has a similar size in a direction that is parallel to the Y-axis relative to the ribs 227 of the second element 220 (*see* FIG. 3B). The distances D, E, and F may be adjusted in various embodiments to enable the foam member 436 to be effectively received in the slots 234B-234G (*see* FIG. 2) and so that an effective seal may be formed.

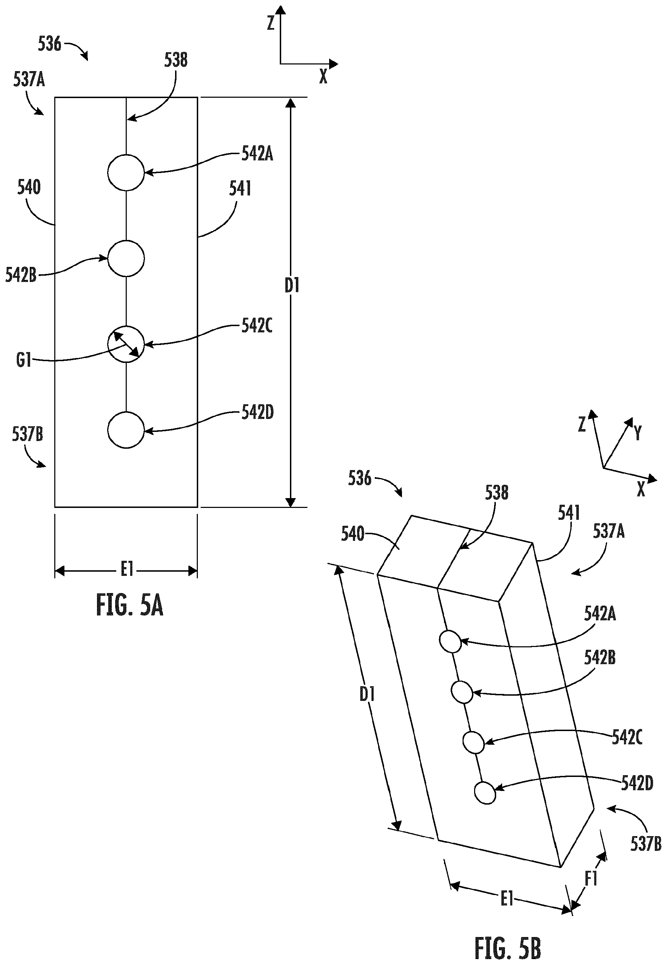

Turning now to FIGS. 5A and 5B, another example foam member 536 is illustrated. The foam member 536 defines a first end 537A and a second end 537B. Additionally, the foam member 536 defines a first portion 540 and a second portion 541, and a slit 538 is defined between the first portion 540 and the second portion 541. The first portion 540 and the second portion 541 are attached together at the second end 537B, and the first portion 540 and the second portion 541 are separated by the slit 538 at the first end 537A. The slit 538 extends partially into the foam member 536 from the first end 537A to the location proximate to the second end 537B where the two portions 540, 541 are attached together.

The foam member 536 is configured to deform elastically. The slit 538 is positioned along a centerline of the foam member 536, but the slit 538 may be provided in different positions in other embodiments. The slit 538 extends along a straight line, but the slit 538 may possess other shapes in other embodiments.

The foam member 536 is configured to receive four or more cables in the slit 538. The foam member 536 defines a first hole 542A, a second hole 542B, a third hole 542C, and a fourth hole 542D. Each of these holes defines a diameter G1. The diameter G1 may be between about 1 millimeter and about 12 millimeters, between about 1.5 millimeter and about 10 millimeters, or between about 2 millimeters and about 8 millimeters in some embodiments. Cables may be received in each of the holes 542A-542D, but cables may be positioned at other locations along the slit 538 as well. The holes 542A-542D may each assist in controlling the position of cables along the slit 538 in a direction that is parallel to the Z-axis. However, in other embodiments, no holes may be provided or a different number of holes may be defined in the foam member 536. Additionally, the holes 542A-542D each define a circular shape, but the holes 542A-542D may define different shapes in other embodiments.

The foam member 536 comprises a rectangular prism shape when it is not in use, however, the foam member 536 may be compressed into different shapes when positioned in a sealing assembly. The foam member 536 extends a distance D1 along a direction that is parallel to the Z-axis from the farthest point on the first end 537A to the farthest point on the second end 537B. The distance D1 may match the distance B (*see* FIG. 3A) so that the foam member 536 is similar in size to the ribs 227 (*see* FIG. 3A) of the second element 220 (*see* FIG. 3A) in a direction that is parallel to the Z-axis. The foam member 536 extends a distance E1 along a direction that is parallel to the X-axis. The distance E1 may match the distance A *(see* FIG. 3A) so that the foam member 536 has a similar size in a direction that is parallel to the X-axis relative to the slots 234B-234G (*see* FIG. 2) of the second element 220 (*see* FIG. 3A). Additionally, as illustrated in FIG. 5B, the foam member 536 extends a distance F1 along a direction that is parallel to the Y-axis. The distance F1 may match the distance C (*see* FIG. 3B) so that the foam member 536 has a similar size in a direction that is parallel to the Y-axis relative to the ribs 227 (*see* FIG. 3B) of the second element 220 (*see* FIG. 3B). The distances D1, E1, and F1 may be adjusted in various embodiments to enable the foam member 536 to be effectively received in the slots 234B-234G (*see* FIG. 2) and so that an effective seal may be formed.

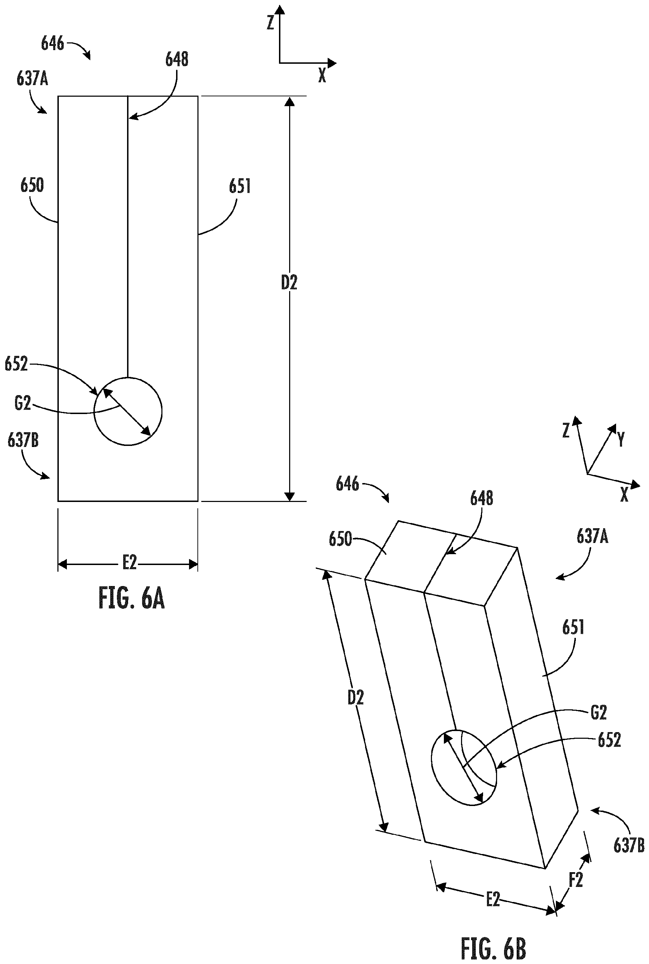

Turning now to FIGS. 6A and 6B, an example of a main input cable foam member 646 (or a main output cable foam member) is illustrated. The main input cable foam member 646 defines a first end 637A and a second end 637B. Additionally, the main input cable foam member 646 defines a first portion 650 and a second portion 651, and a slit 648 is defined between the first portion 650 and the second portion 651. The first portion 650 and the second portion 651 are attached together at the second end 637B, and the first portion 650 and the second portion 651 are separated by the slit 648 at the first end 637A.

The main input cable foam member 646 is configured to deform elastically. The slit 648 is positioned along a centerline of the main input cable foam member 646, but the slit 648 may be provided in different positions in other embodiments. The slit 648 extends along a straight line, but the slit 648 may possess other shapes in other embodiments.

The main input cable foam member 646 is configured to receive one or more cables in the slit 648. The main input cable foam member 646 defines a hole 652, and this hole 652 defines a diameter G2. The diameter G2 may be between about 2.5 millimeters and about 20 millimeters in some embodiments, but the diameter G2 may also be between about 4 millimeters and about 18 millimeters or between about 5 millimeters and about 15 millimeters. A cable such as a main input cable may be received in the hole 652, but cables may be positioned at other locations along the slit 648 as well. The hole 652 may assist in controlling the position of cables along the slit 648 in a direction that is parallel to the Z-axis. However, in other embodiments, no holes may be provided or a different number of holes may be defined in the input cable foam member 646. Additionally, the hole 652 defines a circular shape, but the hole 652 may define different shapes in other embodiments.

The main input cable foam member 646 comprises a rectangular prism shape when it is not in use, however, the main input cable foam member 646 may be compressed into different shapes when positioned in a sealing assembly. The main input cable foam member 646 extends a distance D2 along a direction that is parallel to the Z-axis from the farthest point on the first end 637A to the farthest point on the second end 637B. The distance D2 may match the distance B (*see* FIG. 3A) so that the main input cable foam member 646 is similar in size to the ribs 227 (*see* FIG. 3A) of the second element 220 (*see* FIG. 3A) in a direction that is parallel to the Z-axis. The main input cable foam member 646 extends a distance E2 along a direction that is parallel to the X-axis. The distance E2 may be sized so that the main input cable foam member 646 has a similar size in a direction that is parallel to the X-axis relative to the slots 234A, 234H (*see* FIG. 2) of the second element 220 (*see* FIG. 3A). Additionally, as illustrated in FIG. 6B, the main input cable foam member 646 extends a distance F2 along a direction that is parallel to the Y-axis. The distance F2 may match the distance C (*see* FIG. 3B) so that the main input cable foam member 646 has a similar size in a direction that is parallel to the Y-axis relative to the ribs 227 (*see* FIG. 3B) of the second element 220 (*see* FIG. 3B). The distances D2, E2, and F2 may be adjusted in various embodiments to enable the main input cable foam member 646 to be effectively received in the slots 234A, 234H and so that an effective seal may be formed.

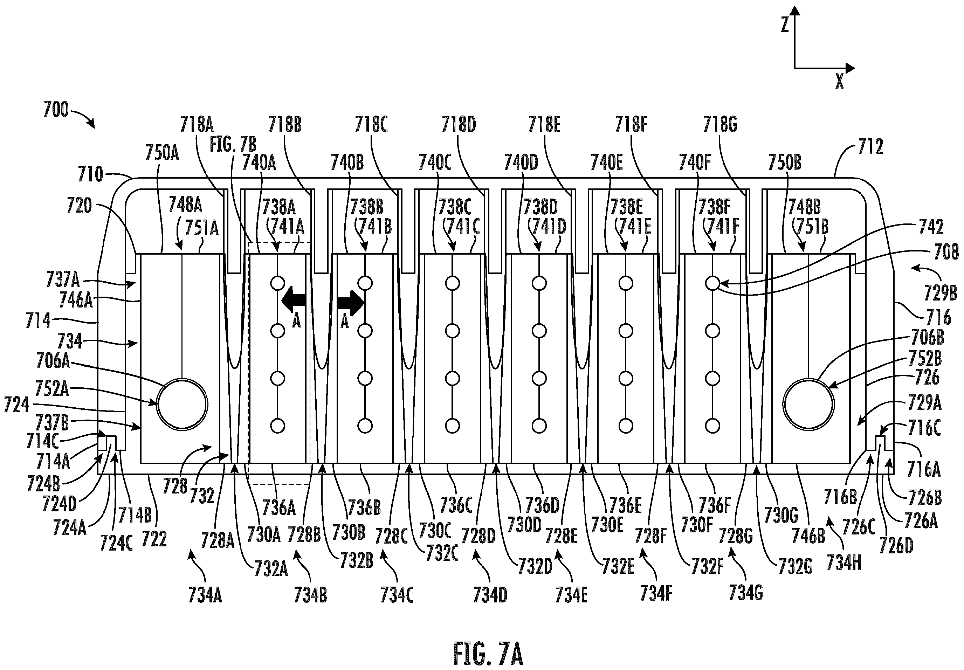

FIG. 7A illustrates an example sealing assembly 700 where a first element 710 is engaging a second element 720. As illustrated in FIG. 7A, the first element 710 defines a base portion 712, and this base portion 712 extends in a direction that is parallel to the X-axis. The first element 710 also defines a plurality of fingers. In the first element 710, a first finger 718A, a second finger 718B, a third finger 718C, a fourth finger 718D, a fifth finger 718E, a sixth finger 718F, and a seventh finger 718G are included. However, a different number of fingers may be included in the first element 710 in other embodiments. Each of the fingers 718A-718G extend between a first end 219A (*see* FIG. 2) and a second end 219B (*see* FIG. 2). At the first end 219A, each of the fingers 718A-718G are attached to the base portion 712. The second end 219B of each of the fingers 718A-718G are free ends.

Additionally, the first element 710 comprises a first arm 714. The first arm 714 is attached to the base portion 712 of the first element 710 and extends in a direction that is parallel to the Z-axis. At the free end of the first arm 714, a first protrusion 714A and a second protrusion 714B extend past other portions of the first arm 714 in a direction that is parallel to the Z-axis, and a first recess 714C is formed between the two protrusions 714A, 714B.

The first element 710 also comprises a second arm 716. The second arm 716 is attached to the base portion 712 and extends in a direction that is parallel to the Z-axis. At the free end of the second arm 716, a first protrusion 716A and a second protrusion 716B extend past other portions of the second arm 716 in a direction that is parallel to the Z-axis, and a recess 716C is formed between the two protrusions 716A, 716B.

The first element 710 may work in conjunction with a second element 720 to form the sealing assembly 700. The second element 720 defines a base portion 722. The second element 720 also defines a plurality of ribs 728. Ribs 728 are positioned in rib pairs. For example, the ribs 728 include a first primary rib 728A and a first secondary rib 730A that form a first rib pair, a second primary rib 728B and a second secondary rib 730B that form a second rib pair, a third primary rib 728C and a third secondary rib 730C that form a third rib pair, a fourth primary rib 728D and a fourth secondary rib 730D that form a fourth rib pair, a fifth primary rib 728E and a fifth secondary rib 730E that form a fifth rib pair, a sixth primary rib 728F and a sixth secondary rib 730F that form a sixth rib pair, and a seventh primary rib 728G and a seventh secondary rib 730G that form a seventh rib pair 727G. Each of the ribs 728 extend between a first end 729A and a second end 729B. The first end 729A of each of the ribs 728is attached to the base portion 722.

Gaps 732 are defined in the second element 720 where fingers 718A-718G of the first element 710 may be received, and each gap is defined between two ribs of a respective rib pair. A first gap 732A is defined between the first primary rib 728A and the first secondary rib 730A of the first rib pair. A second gap 732B is defined between the second primary rib 728B and the second secondary rib 730B of the second rib pair. A third gap 732C is defined between the third primary rib 728C and the third secondary rib 730C of the third rib pair. A fourth gap 732D is defined between the fourth primary rib 728D and the fourth secondary rib 730D of the fourth rib pair. A fifth gap 732E is defined between the fifth primary rib 728E and the fifth secondary rib 730E of the fifth rib pair. A sixth gap 732F is defined between the sixth primary rib 728F and the sixth secondary rib 730F of the sixth rib pair. A seventh gap 732G is defined between the seventh primary rib 728G and the seventh secondary rib 730G of the seventh rib pair.

Additionally, the second element 720 comprises a first arm 724. The first arm 724 is attached to the base portion 722 at one end and extends in a direction that is parallel to the Z-axis. A first extension 724A extends off the side of the first arm 724 so that the first extension 724A extends farther in a direction parallel to the X-axis relative to other portions of the first arm 724. A protrusion 724D protrudes from a surface of the first extension 724A in a direction that is parallel to the Z-axis past other portions of the first extension 724A, and a first recess 724B and a second recess 724C are positioned on each side of the protrusion 724D.

The protrusion 724D and the recesses 724B, 724C may be used to position the second element 720 relative to the first element 710. The first element 710 includes a first arm 714. The first arm 714 is attached to the base portion 712 and extends in a direction that is parallel to the Z-axis. At the free end of the first arm 714, a first protrusion 714A and a second protrusion 714B extend past other portions of the first arm 714 in a direction that is parallel to the Z-axis, and a first recess 714C is formed between the two protrusions 714A, 714B. The first recess 714C defined in the first element 710 may receive the protrusion 724D of the second element 720, the first recess 724B defined in the second element 720 may receive the first protrusion 714A of the first element 710, and the second recess 724C defined in the second element 720 may receive the second protrusion 714B of the first element 710. The engagement of these features may enable the first element 710 and the second element 720 to be positioned appropriately relative to each other.

The second element 720 also comprises a second arm 726. The second arm 726 is attached to the base portion 722 at one end and extends in a direction that is parallel to the Z-axis. A second extension 726A extends off the side of the second arm 726 so that the second extension 726A extends farther in a direction parallel to the X-axis relative to other portions of the second arm 726. A protrusion 726D protrudes from a surface of the second extension 726A in a direction that is parallel to the Z-axis past other portions of the second extension 726A, and a first recess 726B and a second recess 726C are positioned on each side of the protrusion 726D.

The protrusion 726D and the recesses 726B, 726C may be used to position the second element 720 relative to the first element 710. The first element 710 includes a second arm 716. The second arm 716 is attached to the base portion 712 and extends in a direction that is parallel to the Z-axis. At the free end of the second arm 716, a first protrusion 716A, and a second protrusion 716B extend past other portions of the second arm 716 in a direction that is parallel to the Z-axis, and a recess 716C is formed between the two protrusions 716A, 716B. The recess 716C defined in the first element 710 may receive the protrusion 726D of the second element 720, the first recess 726B defined in the second element 720 may receive the first protrusion 716A of the first element 710, and the second recess 726C defined in the second element 720 may receive the second protrusion 716B of the first element 710. The engagement of these features may enable the first element 710 and the second element 720 to be positioned appropriately relative to each other.

The second element 720 also defines a plurality of slots 734 where foam members may be received. Many of the slots 734 are formed between adjacent rib pairs. However, one slot 734A is formed between a rib pair and the first arm 724, and another slot 734H is formed between a rib pair and the second arm 726. A first slot 734A is formed between the first arm 724 and the first rib pair formed by the first primary rib 728A and the first secondary rib 730A. A second slot 734B is formed between the first rib pair and the second rib pair 727B formed by the second primary rib 728B and the second secondary rib 730B. A third slot 734C is formed between the second rib pair 727B and the third rib pair 727C formed by the third primary rib 728C and the third secondary rib 730C. A fourth slot 734D is formed between the third rib pair 727C and the fourth rib pair formed by the fourth primary rib 728D and the fourth secondary rib 730D. A fifth slot 734E is formed between the fourth rib pair and the fifth rib pair formed by the fifth primary rib 728E and the fifth secondary rib 730E. A sixth slot 734F is formed between the fifth rib pair and the sixth rib pair formed by the sixth primary rib 728F and the sixth secondary rib 730F. A seventh slot 734G is formed between is formed between the sixth rib pair and the seventh rib pair formed by the seventh primary rib 728G and the seventh secondary rib 730G. An eighth slot 734H is formed between the seventh rib pair and the second arm 726.

In some embodiments, the first element 710 is assembled at the base 104 (*see* FIG. 1A) and the second element 720 is assembled at the cover 102 (*see* FIG. 1A). In another embodiment, the first element is assembled at the cover 102 and the second element 720 is assembled at the base 104. In either embodiment, transitioning the cover 102 from the open position to the closed position may be configured to cause each finger of the plurality of fingers 718A-718G in the first element 710 to be received in a respective gap of the plurality of gaps 732 defined in the second element 720. The second element 720 is also configured to receive foam members 736A-736F in each slot of the plurality of slots 734, and receipt of the fingers 718A-718G in the gaps 732 causes compression of the foam members 736A-736F in the slots 734.

Various foam members are provided in the sealing assembly illustrated in FIG. 7A. A first foam member 736A, a second foam member 736B, a third foam member 736C, a fourth foam member 736D, a fifth foam member 736E, and a sixth foam member 736F are provided. Each of the foam members 736A-736F may be similar to the foam member 536 of FIGS. 5A-5B, but others may be used. The foam members 736A-736F each define a first end 537A (*see* FIG. 5A) and a second end 537B (*see* FIG. 5A). Additionally, the foam members 736A-736F each define a first portion and a second portion, and a slit is defined between these portions. The first foam member 736A defines a first portion 740A and a second portion 741A, and a first slit 738A is defined between the first portion 740A and the second portion 741A. The first slit 738A extends partially into the first foam member 736A from the first end 737A to the location proximate to the second end 737B where the two portions 740A, 741A are attached together. In the first foam member 736A, the first portion 740A and the second portion 741A are attached together at the second end 737B, and the first portion 740A and the second portion 741A are separated by the first slit 738A at the first end 737A. The second foam member 736B defines a first portion 740B and a second portion 741B, and a second slit 738B is defined between the first portion 740B and the second portion 741B. The second slit 738B extends partially into the second foam member 736B from the first end 737A to the location proximate to the second end 737B where the two portions 740B, 741B are attached together. In the second foam member 736B, the first portion 740B and the second portion 741B are attached together at the second end 737B, and the first portion 740B and the second portion 741B are separated by the second slit 738B at the first end 737A. The third foam member 736C defines a first portion 740C and a second portion 741C, and a third slit 738C is defined between the first portion 740C and the second portion 741C. The third slit 738C extends partially into the third foam member 736C from the first end 737A to the location proximate to the second end 737B where the two portions 740C, 741C are attached together. In the third foam member 736C, the first portion 740C and the second portion 741C are attached together at the second end 737B, and the first portion 740C and the second portion 741C are separated by the third slit 738C at the first end 737A. The fourth foam member 736D defines a first portion 740D and a second portion 741D, and a fourth slit 738D is defined between the first portion 740D and the second portion 741D. The fourth slit 738D extends partially into the fourth foam member 736D from the first end 737A to the location proximate to the second end 737B where the two portions 740D, 741D are attached together. In the fourth foam member 736D, the first portion 740D and the second portion 741D are attached together at the second end 737B, and the first portion 740D and the second portion 741D are separated by the fourth slit 738D at the first end 737A. The fifth foam member 736E defines a first portion 740E and a second portion 741E, and a fifth slit 738E is defined between the first portion 740E and the second portion 741E. The fifth slit 738E extends partially into the fifth foam member 736E from the first end 737A to the location proximate to the second end 737B where the two portions 740E, 741E are attached together. In the fifth foam member 736E, the first portion 740E and the second portion 741E are attached together at the second end 737B, and the first portion 740E and the second portion 741E are separated by the fifth slit 738E at the first end 737A. The sixth foam member 736F defines a first portion 740F and a second portion 741F, and a sixth slit 738F is defined between the first portion 740F and the second portion 741F. The sixth slit 738F extends partially into the sixth foam member 736F from the first end 737A to the location proximate to the second end 737B where the two portions 740F, 741F are attached together. In the sixth foam member 736F, the first portion 740F and the second portion 741F are attached together at the second end 737B, and the first portion 740F and the second portion 741F are separated by the sixth slit 738F at the first end 737A.

The foam members 736A-736F are configured to deform elastically. The slits 738A-738F are each positioned along a centerline of the foam members 736A-736F, but the slits 738A-738F may be provided in different positions in other embodiments. The slits 738A-738F extend along a straight line, but the slits 738A-738F may possess other shapes in other embodiments.

The foam members 736A-736F are each configured to receive four or more cables in the slits 738A-738F. Each of the foam members 736A-736F defines four holes 742. These holes 742 may each be circular in shape, but the holes 742 may define different shapes in other embodiments. Where holes 742 possess a circular shape, the holes 742 may each define a diameter similar to the diameter G1 of the holes 542A-542D illustrated in FIG. 5A. Output cables 708 may be received in each of the holes 742, but output cables 708 may be positioned at other locations along the slits 738A-738F as well. The holes 742 may each assist in controlling the position of output cables 708 along the slits 738A-738F in a direction that is parallel to the Z-axis. However, in other embodiments, no holes may be provided or a different number of holes may be defined in the foam members 736A-736F.

The foam members 736A-736F comprise a rectangular prism shape when they are not in use. However, the foam member 736A-736F may be compressed into different shapes when positioned in a sealing assembly 700. For example, when the fingers 718A-718G are received in the gaps 732 and shift to the relative positions illustrated in FIG. 7A, the fingers 718A-718G cause the ribs 728B-728G, 730A-730F to move to allow the gaps 732 to be expanded. This results in ribs 728B-728G, 730A-730F moving towards a respective slot of the slots 734B-734G, reducing the size of each of the slots 734B-734G. Consequently, movement of the ribs 728B-728G, 730A-730F towards the slots 734B-734G causes compression of the foam members 736A-736F.

The compression forces acting on the foam members 736A-736F largely act in directions that are parallel to the X-axis in FIG. 7A, with the ribs 728B-728G, 730A-730F urging against the foam members 736A-736F to form an effective seal of secondary output cables 708 in the foam members 736A-736F. For example, arrows A illustrate example directions of the compression forces as the second finger 718B is received by the second gap 732B. The ribs 728B-728G, 730A-730F tend to deflect in greater amounts proximate to the second end 729B relative to portions proximate to the first end 729A due to the attachment of the ribs 728B-728G, 730A-730F at the first end 729A of the second member 720.

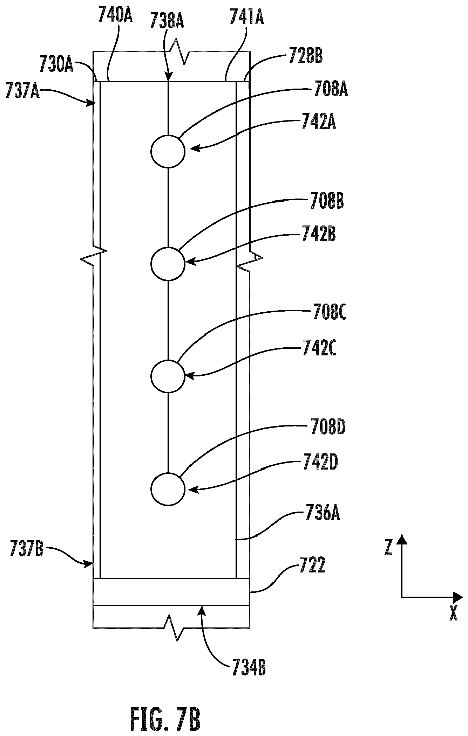

FIG. 7B illustrates the first foam member 736A when the first element 710 is in a closed position. The first foam member 736A defines a first hole 742A, a second hole 742B, a third hole 742C, and a fourth hole 742D at various positions along the first slit 738A. The first hole 742A is configured to receive a first secondary output cable 708A, the second hole 742B is configured to receive a second secondary output cable 708B, the third hole 742C is configured to receive a third secondary output cable 708C, and the fourth hole 742D is configured to receive a fourth secondary output cable 708D.

When the first element 710 is in the closed position, the first foam member 736A and the other foam members 736B-736F illustrated in FIG. 7A maintain a rectangular prism shape as a result of the compression of the fingers 718A-718G along the directions A against the ribs 728B-728G, 730A-730F. The compression acting on the first foam member 736A causes an effective seal to be maintained for the secondary output cables 708A-708D in the holes 742A-742D. Additionally, if any other cables are provided at other positions along the first slit 738A, the compression acting on the first foam member 736A causes an effective seal to be maintained for these additional cables as well.

Turning back to FIG. 7A, a main input cable foam member 746A is configured to receive a main input cable. Similarly, a main output cable foam member 746B is configured to receive a main output cable. Both the main input cable foam member 746A and the main output cable foam member 746B define a first end 737A and a second end 737B and are configured to deform elastically. The main input cable foam member 746A defines a first portion 750A and a second portion 751A, and a slit 748A is defined between the first portion 750A and the second portion 751A. In the main input cable foam member 746A, the first portion 750A and the second portion 751A are attached together at the second end 737B, and the first portion 750A and the second portion 751A are separated by the slit 748A at the first end 737A. A hole 752A is defined in the slit 748A of the main input cable foam member 746A, and the hole 752A is configured to receive a main input cable 706A. The main output cable foam member 746B defines a first portion 750B and a second portion 751B, and a slit 748B is defined between the first portion 750B and the second portion 751B. In the main output cable foam member 746B, the first portion 750B and the second portion 751B are attached together at the second end 737B, and the first portion 750B and the second portion 751B are separated by the slit 748B at the first end 737A. A hole 752B is defined in the slit 748B of the main output cable foam member 746B, and the hole 752B is configured to receive a main output cable 706B. Holes 752A, 752B may possess a circular shape. Where this is the case, the holes 742 may each define a diameter similar to the diameter G2 of the hole 652 illustrated in FIG. 6A. A cable such as a main input cable or a main output cable may be received in each of the holes 752A, 752B, but cables may be positioned at other locations along the slits 748A, 748B as well. The holes 752A, 752B may assist in controlling the position of cables along the slits 748A, 748B in a direction that is parallel to the Z-axis.

The main input cable foam member 746A and the main output cable foam member 746B are configured to deform elastically. The slits 748A-748B are each positioned along a centerline of the input cable foam members 746A-746B, but the slits 748A-748B may be provided in different positions in other embodiments. The slits 748A-748B extend along a straight line, but the slits 748A-748B may possess other shapes in other embodiments.

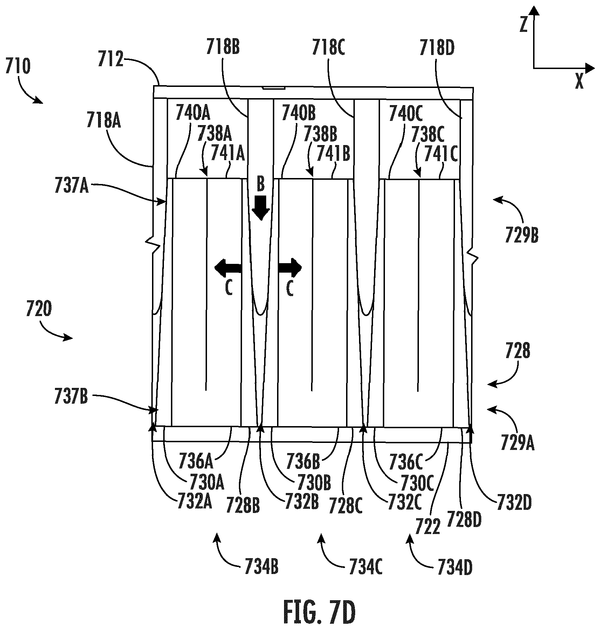

The main input cable foam member 746A and the main output cable foam member 746B comprise a rectangular prism shape when they are not in use. However, the main input cable foam member 746A and the main output cable foam member 746B may be compressed into different shapes when positioned in a sealing assembly. For example, when the fingers 718A-718G are received in the gaps 732 and shift to the relative positions illustrated in FIG. 7A, the fingers 718A, 718G cause the ribs 728A, 730G to move to allow the gaps 732A, 732G to be expanded. This results in ribs 728A, 730G moving towards a respective slot of the slots 734A, 734H, reducing the size of each of the slots 734A, 734H. Consequently, movement of the ribs 728A, 730G towards the slots 734A, 734H causes compression of the main input cable foam member 746A and the main output cable foam member 746B. When the cover 102 (*see* FIG. 1A) is shifted to a closed position relative to a base 104 (*see* FIG. 1A), the cover 102 generally shifts along a direction that is parallel to the Z-axis in FIG. 7D, causing the fingers 718A-718D in FIG. 7D to generally shift along a direction that is parallel to the Z-axis. However, the compression force acting on the main input cable foam member 746A and the main output cable foam member 746B largely acts in directions that are parallel to the X-axis in FIG. 7A, with the ribs 728A, 730G urging against the main input cable foam member 746A and the main output cable foam member 746B to form an effective seal of the main input cable 706A and the main output cable 706B. This approach results in relatively uniform compression of the main input cable foam member 746A and the main output cable foam member 746B when the sealing assembly is in a closed state. The ribs 728A, 730G tend to deflect in greater amounts proximate to the second end 729B relative to portions proximate to the first end 729A due to the attachment of the ribs 728A, 730G at the first end 729A of the second member 720.

FIG. 7A illustrates the main input cable foam member 746A and the main output cable foam member 746B when the cover 102 (*see* FIG. 1A) is in a closed position - in this position, the main input cable foam member 746A and the main output cable foam member 746B maintain a rectangular prism shape as a result of the compression of the finger 718A against the first primary ribs 728A and the compression of the finger 718G against the seventh secondary rib 730G.

In the illustrated embodiment of FIG. 7A, the first element 710 may be positioned on the cover 102 (*see* FIG. 1A) and the second element 720 may be positioned on the base 104 (*see* FIG. 1A). Where this is the case, transitioning the cover 102 from the open position to the closed position causes each finger of the plurality of fingers 718A-718G in the first element 710 to be received in a respective gap of the plurality of gaps 732. The receipt of the fingers 718A-718G in the gaps 732 causes compression of the main input cable foam member 746A, the main output cable foam member 746B, and the foam members 736A-736F in the slots 734.

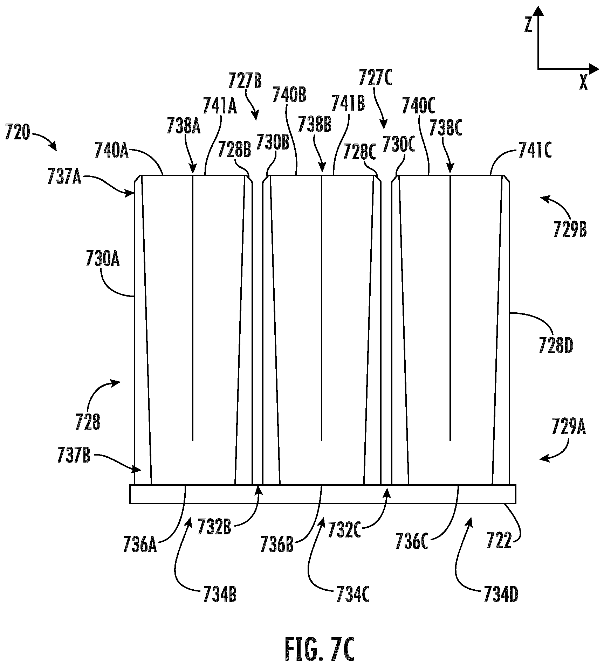

Before the foam members 736A-736F, 746A-746B are placed in the slots 734, the foam members 736A-736F, 746A-746B generally have a rectangular cuboid shape. When the foam members 736A-736F, 746A-746B are initially received in slots 734, the shape of the foam members 736A-736F, 746A-746B may conform to the shape of the respective ribs that the foam members 736A-736F, 746A-746B are in contact with. FIG. 7C illustrates this, with the foam members 736A-736C shown in the slots 734B-734D. In FIG. 7C, the fingers 718A-718G of the first element 710 are not being received in the gaps 732 of the second member 720. Consequently, there is minimal deflection in the ribs 728B-728D, 730A-730C. With this minimal deflection, the foam members 736A-736C illustrated in FIG. 7C have a trapezoidal cross-sectional shape in a plane that is parallel the X-Z plane, with a greater width along a direction parallel to the X-axis at the first end 737A relative to the second end 737B. In creating this trapezoidal cross-sectional shape, the ribs 728are urged against the foam members 736A-736F, 746A-746B to compress the foam members 736A-736F, 746A-746B, creating a better seal and improved insulation.

In FIG. 7D, the fingers 718A-718G of the first element 710 are being received in the gaps 732 of the second member 720. The receipt of these fingers 718A-718G causes the ribs 728B-728D, 730A-730C illustrated in FIG. 7D to move to allow the gaps 732A-732D to be expanded. When the cover 102 (*see* FIG. 1A) is shifted to a closed position relative to a base 104 (*see* FIG. 1A), the cover 102 generally shifts along a direction that is parallel to the Z-axis in FIG. 7D, causing the fingers 718A-718D in FIG. 7D to generally shift along a direction that is parallel to the Z-axis (e.g., in the direction indicated by arrow B). However, the compression force (such as illustrated by arrows C) acting on the foam members 736A-736C largely acts in directions that are parallel to the X-axis in FIG. 7A, with the ribs 728B-728D, 730A-730C urging against the foam members 736A-736C to form an effective seal of any cables in the foam members 736A-736C. This approach results in relatively uniform compression of the foam members 736A-736C when the sealing assembly is in a closed state. This results in the ribs 728B-728D, 730A-730C moving towards a respective slot of the slots 734B-734D, reducing the size of each of the slots 734B-734D. Consequently, movement of the ribs 728B-728D, 730A-730C towards the slots 734B-734D causes compression of the foam members 736A-736C.

The compression force acting on the foam members 736A-736C largely acts in directions that are parallel to the X-axis in FIG. 7A, with the ribs 728B-728D, 730A-730C urging against the foam members 736A-736C to form an effective seal of any cables in the foam members 736A-736C. The ribs 728B-728D, 730A-730C tend to deflect in greater amounts proximate to the second end 729B relative to portions proximate to the first end 729A due to the attachment of the ribs 728B-728G, 730A-730F at the first end 729A of the second member 720. Consequently, the foam members 736A-736C each ultimately form a rectangular prism shape due to the increased amount of deflection at the second end 729B of the ribs 728B-728D, 730A-730C.

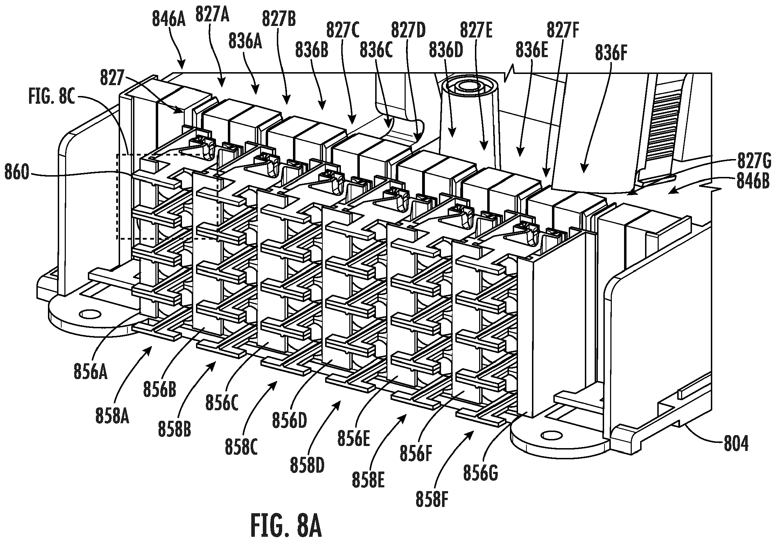

Looking now at FIG. 8A, a plurality of strain relief features are illustrated. The strain relief features are each configured to provide strain relief for a secondary output cable. The strain relief features are configured to be the elements to which cables are attached in order to ensure potential stress and tension in the cables are reduced to minimum. In FIG. 8A, rib pairs 827A-827G are illustrated, with foam members 836A-836F positioned between the rib pairs 827A-827G. A first foam member 836A is positioned between a first rib pair 827A and a second rib pair 827B. A second foam member 836B is positioned between a second rib pair 827B and a third rib pair 827C. A third foam member 836C is positioned between a third rib pair 827C and a fourth rib pair 827D. A fourth foam member 836D is positioned between a fourth rib pair 827D and a fifth rib pair 827E. A fifth foam member 836E is positioned between a fifth rib pair 827E and a sixth rib pair 827F. A sixth foam member 836F is positioned between a sixth rib pair 827F and a seventh rib pair 827G. Additionally, a first input cable foam member 846A is positioned adjacent to the first rib pair 827A and a second input cable foam member 846B is positioned adjacent to the seventh rib pair 827G. Each of the ribs 827 of the rib pairs 827A-827G are attached to the base 804.

Additionally, various guides 856A-856G are provided that may assist in positioning strain relief features. The first guide 856A is positioned adjacent to the first rib pair 827A and may be attached to the first rib pair 827A. The second guide 856B is positioned adjacent to the second rib pair 827B and may be attached to the second rib pair 827B. The third guide 856C is positioned adjacent to the third rib pair 827C and may be attached to the third rib pair 827C. The fourth guide 856D is positioned adjacent to the fourth rib pair 827D and may be attached to the fourth rib pair 827D. The fifth guide 856E is positioned adjacent to the fifth rib pair 827E and may be attached to the fifth rib pair 827E. The sixth guide 856F is positioned adjacent to the sixth rib pair 827F and may be attached to the sixth rib pair 827F. The seventh guide 856G is positioned adj acent to the seventh rib pair 827G and may be attached to the seventh rib pair 827G.

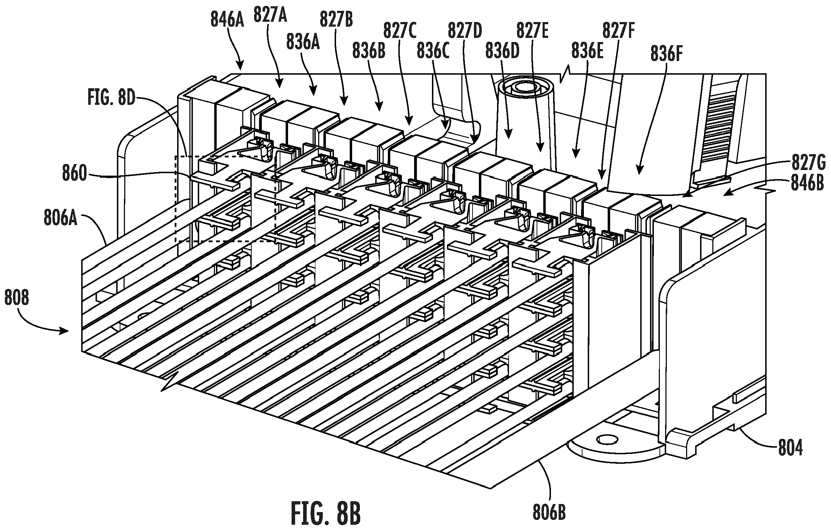

Various strain relief features are provided adjacent to the foam members 836A-836F. The strain relief features are each configured to provide strain relief for cables that are received within the foam members 836A-836F. A first strain relief feature array 858A is positioned adjacent to the first foam member 836A, with the first strain relief feature array 858A being positioned between the first guide 856A and the second guide 856B. A second strain relief feature array 858B is positioned adjacent to the second foam member 836B, with the second strain relief feature array 858B being positioned between the second guide 856B and the third guide 856C. A third strain relief feature array 858C is positioned adjacent to the third foam member 836C, with the third strain relief feature array 858C being positioned between the third guide 856C and the fourth guide 856D. A fourth strain relief feature array 858D is positioned adjacent to the fourth foam member 836D, with the fourth strain relief feature array 858D being positioned between the fourth guide 856D and the fifth guide 856E. A fifth strain relief feature array 858E is positioned adjacent to the fifth foam member 836E, with the fifth strain relief feature array 858E being positioned between the fifth guide 856E and the sixth guide 856F. A sixth strain relief feature array 858F is positioned adjacent to the sixth foam member 836F, with the sixth strain relief feature array 858F being positioned between the sixth guide 856F and the seventh guide 856G. As illustrated in FIG. 8B, each of the strain relief features in the strain relief feature arrays 858A-858F are configured to receive a respective output cable 808 to provide strain relief to the respective output cable 808. Strain relief features may also be provided for input cables 806A, 806B in some embodiments.

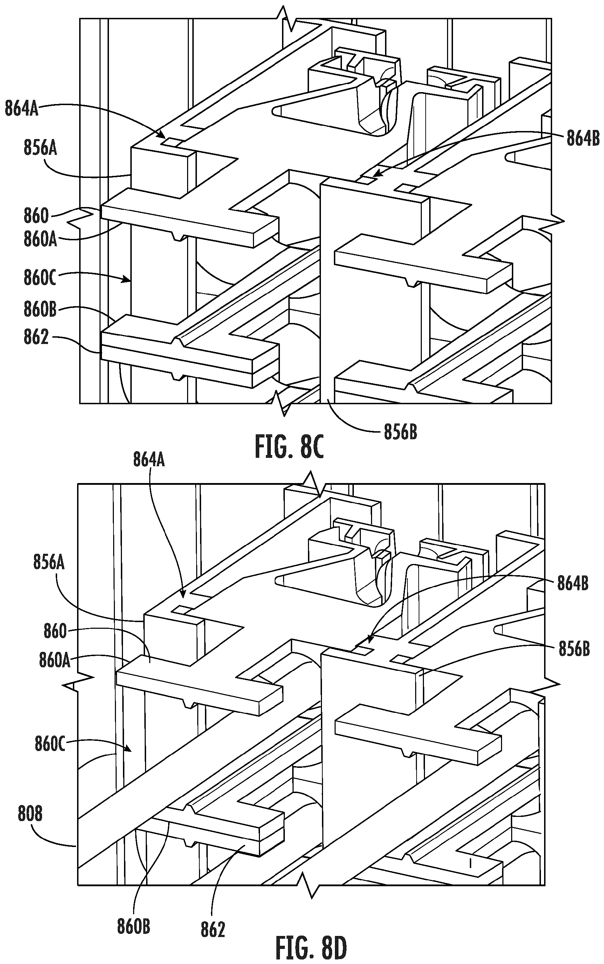

The foam members 836A-836F are each configured to receive four cables. Thus, each of the strain relief feature arrays 858A-858F comprise four strain individual strain relief feature therein. Further details regarding an individual strain relief feature 860 are illustrated in FIG. 8C. The strain relief feature 860 comprises a first portion 860A and a second portion 860B, and an opening 860C is defined in the strain relief feature 860 between the first portion 860A and the second portion 860B. As illustrated in FIG. 8D, output cables 808 may be received within the openings 860C defined in the strain relief feature 860, and the strain relief features may each contact a respective output cable 808 to provide strain relief to the output cable 808.

The strain relief feature 860 is provided in the first strain relief feature array 858A illustrated in FIG. 8A, and the strain relief feature 860 is positioned between the first guide 856A and the second guide 856B. A second strain relief feature 862 is partially shown adjacent to the strain relief feature 860. The first guide 856A defines a slot 864A, the second guide 856B defines a slot 864B, and portions of the strain relief feature 860 may be received within the slots 864A, 864B to control the positioning of the strain relief feature 860.

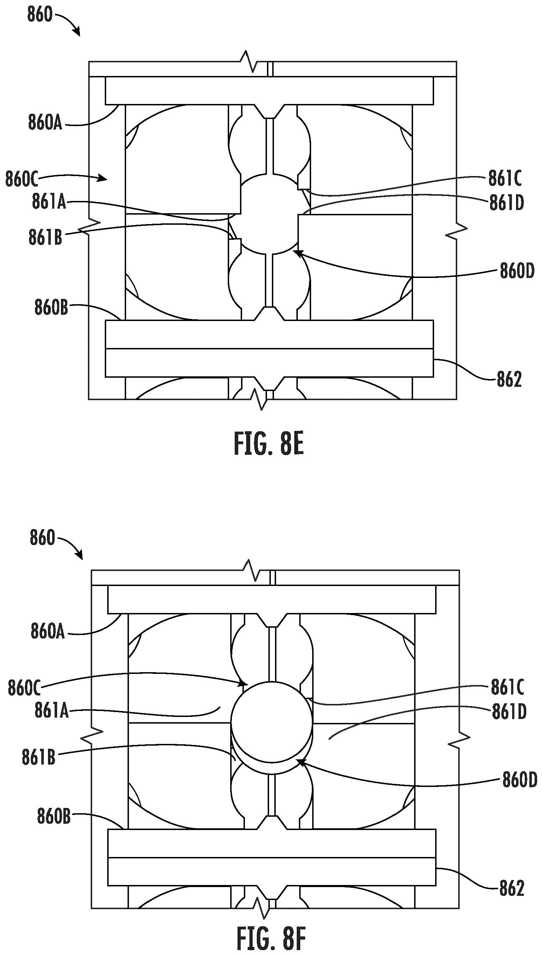

Further details regarding the operation of the strain relief feature 860 may be seen in FIG. 8E. The strain relief feature 860 defines a recess 860D, and this recess 860D may possess a cross sectional size that is similar to a secondary output cable 808. Protrusions 861A, 861C are provided on the first portion 860A, and these protrusions 861A, 861C extend inwardly into a pathway formed by the recess 860D. Additionally, protrusions 861B, 861D are provided on the second portion 860B, and these protrusions 861B, 861D extend inwardly into a pathway formed by the recess 860D. Thus, when an output cable 808 is received within the recess 860D as illustrated in FIG. 8F, the protrusions 861A-861D are configured to come in contact with the secondary output cable 808 and to provide strain relief for the secondary output cable 808.

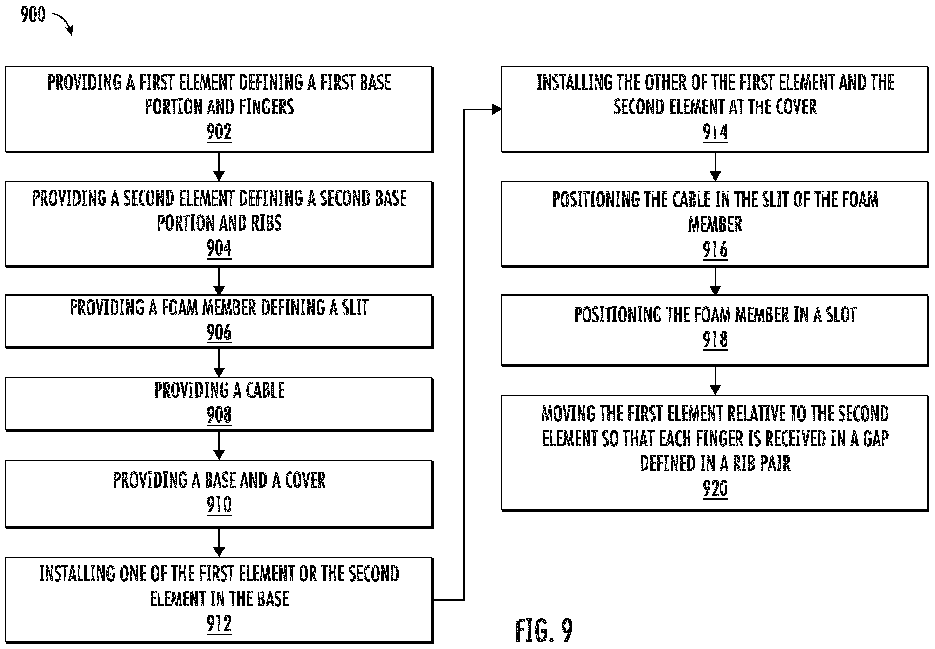

Turning now to FIG. 9, a flow chart showing an example method 900 for sealing one or more cables using a sealing assembly is provided. At operation 902, a first element is provided that defines a first base portion and a plurality of fingers. The plurality of fingers are each attached to the first base portion at a first end of the plurality of fingers.

At operation 904, a second element is provided that defines a second base portion and a plurality of ribs. A first end of each rib of the plurality of ribs is attached to the second base portion. The plurality of ribs are positioned in rib pairs. Additionally, a plurality of gaps are defined in the second element with each gap being defined between two ribs of a respective rib pair. The second element defines a plurality of slots with each slot of the plurality of slots being formed between adjacent rib pairs.

At operation 906, a foam member is provided that defines a slit. In some embodiments, more than one foam member may be provided at operation 906. At operation 908, a cable is provided. At operation 910, a base and a cover are provided, with the cover having an open position and a closed position. In the open position, the cover and the base are at least partially separated so that the inner contents of the base and the cover may be reached.

At operation 912, one of the first element or the second element are installed on the base. At operation 914, the other of the first element or the second element are installed on the cover. For example, the second element is installed on the cover where the first element is installed on the base at operation 912, and the second element is installed on the base where the first element is installed on the cover at operation 912.

At operation 916, the cable is positioned in the slit of the foam member. At operation 918, the foam member(s) are positioned in a slot of the plurality of slots (notably, however, in some embodiments, the cable(s) may be positioned within the slit while the foam member(s) are already in a corresponding slot). At operation 920, the first element is moved relative to the second element so that each finger is received in a gap defined in a rib pair of the second element. Receipt of the fingers in the plurality of gaps causes compression of the foam member(s) in the slot. In embodiments where the first element and the second element are both positioned on one of the base or the cover, the first element may be moved relative to the second element at operation 920 by transitioning the cover from the open position to the closed position to cause the first element to move relative to the second element.

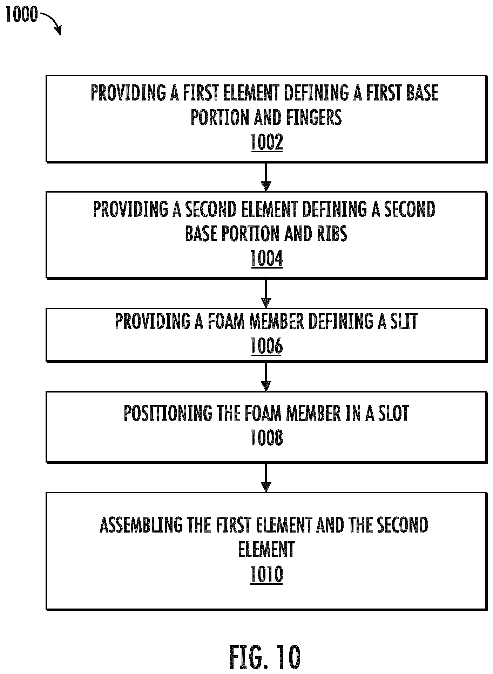

Turning now to FIG. 10, a flow chart showing an example method of manufacturing a sealing assembly is provided. At operation 1002, a first element is provided. The first element defines a first base portion and a plurality of fingers. A first end of each finger of the plurality of fingers is attached to the first base portion. At operation 1004, a second element is provided. The second element defines a second base portion and a plurality of ribs. A first end of each rib of the plurality of ribs is attached to the second base portion. The plurality of ribs are positioned in rib pairs. Additionally, a plurality of gaps are defined in the second element with each gap of the plurality of gaps being defined between two ribs of a respective rib pair. The second element defines a plurality of slots with at least one slot of the plurality of slots being formed between adjacent rib pairs. At operation 1006, a foam member is provided defining a slit. In some embodiments, more than one foam member may be provided at operation 1006.

At operation 1008, the foam member(s) are positioned in a slot of the plurality of slots. At operation 1010, the first element and the second element are assembled. In some embodiments, assembly of the first element and the second element may be accomplished by attaching the first element and the second element to a base or a cover and by attaching the base and the cover. However, assembly of the first element and the second element may be accomplished in other ways. The first element and the second element are assembled at operation 1010 such that the first element is configured to move relative to the second element so that each finger of the plurality of fingers in the first element is received in a respective gap of the gaps defined in the rib pairs of the second element. Receipt of the plurality of fingers in the gaps causes compression of the at least one foam member in the slot.

### CONCLUSION

Many modifications and other embodiments set forth herein will come to mind to one skilled in the art to which these embodiments pertain having the benefit of the teachings presented in the foregoing descriptions and the associated drawings. Therefore, it is to be understood that the embodiments are not to be limited to the specific embodiments disclosed and that modifications and other embodiments are intended to be included within the scope of the invention. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the invention. In this regard, for example, different combinations of elements and/or functions than those explicitly described above are also contemplated within the scope of the invention. Although specific terms are employed herein, they are used in a generic and descriptive sense only and not for purposes of limitation.

## Claims

1. An enclosure comprising:
a base;
a cover coupled to the base, the cover having an open position and a closed position;
a first element comprising a first base portion and a plurality of fingers, wherein a first end of each of the plurality of fingers is attached to the first base portion;
a second element comprising a second base portion and a plurality of ribs, wherein a first end of each rib of the plurality of ribs is attached to the second base portion, wherein the plurality of ribs are positioned in rib pairs, wherein a plurality of gaps are defined in the second element with each gap of the plurality of gaps being defined between two ribs of a respective rib pair, and wherein the second element defines a plurality of slots with at least one slot of the plurality of slots being formed between adjacent rib pairs; and
at least one foam member with a slit defined therein, wherein the at least one foam member is configured to receive a cable in the slit,
wherein the second element is configured to receive the at least one foam member in a slot of the plurality of slots, wherein one of the first element or the second element are attached to the base, wherein the other of the first element and the second element are attached to the cover, wherein transitioning the cover from the open position to the closed position causes each finger of the plurality of fingers in the first element to be received in a respective gap of the plurality of gaps so as to cause compression of the at least one foam member in the slot about the cable in the slit.

2. The enclosure of Claim 1, wherein receipt of the plurality of fingers in the plurality of gaps causes the plurality of ribs to move to allow the plurality of gaps to be expanded, wherein the plurality of ribs move towards the plurality of slots to reduce the size of the plurality of slots, and wherein movement of the plurality of ribs towards the plurality of slots causes compression of the at least one foam member.

3. The enclosure of any of Claims 1-2, wherein the plurality of ribs each define a first surface, wherein the first surface of each rib of the plurality of ribs faces a respective slot of the plurality of slots, wherein the second base portion defines a second surface, and wherein the first surface defines an obtuse angle relative to the second surface.

4. The enclosure of any of Claims 1-3, wherein the at least one foam member is configured to receive a plurality of cables in the slit.

5. The enclosure of Claim 4, wherein the at least one foam member is configured to receive at least four cables in the slit.

6. The enclosure of any of Claims 1-5, wherein the at least one foam member defines at least one hole, and wherein the at least one hole is positioned along the slit.

7. The enclosure of any of Claims 1-6, wherein the at least one foam member is configured to deform elastically.

8. The enclosure of any of Claims 1-7, wherein the at least one foam member has a rectangular prism shape.

9. The enclosure of Claim 8, wherein the slit is positioned along a centerline of the at least one foam member.

10. The enclosure of any of Claims 1-9, further comprising at least one strain relief feature that is configured to provide strain relief to the cable.

11. The enclosure of Claim 10, wherein the strain relief feature is positioned proximate to the first element and the second element.

12. The enclosure of Claim 1, wherein the cover comprises a mounting feature configured to facilitate mounting of the enclosure to a surface in an outside environment.
